# EUROPEAN PATENT APPLICATION

(11) **EP 4 827 105 A2**
(43) Date of publication of application: **21.10.2026**
(21) Application number: 26202640.4
(22) Date of filing: 13.05.2022
(51) Int. Cl.: H04N 23/68

(54) **CAMERA APPARATUS**

(30) Priority: 21.05.2021 KR 20210065808
(62) Document number(s) of the earlier application(s) in accordance with Art. 76 EPC: 22804911.0 / 4 344 187
(71) Applicant: LG Innotek Co., Ltd., Seoul 07796 (KR)
(72) Inventor: PARK, Sang Ok, 07796 Seoul (KR); KIM, Jung Cheol, 07796 Seoul (KR); KIM, Hyun Soo, 07796 Seoul (KR)
(74) Representative: DREISS Patentanwälte PartG mbB

(57) **Abstract**

The present embodiment relates to a camera device comprising: a fixed part; a first moving part comprising a lens and disposed inside the fixed part; a second moving part comprising an image sensor and disposed inside the fixed part; a first magnet and a second magnet disposed in the fixed part; a first coil disposed in the first moving part and disposed at a position corresponding to the first magnet; and a second coil disposed in the second moving part and disposed at a position corresponding to the second magnet, wherein the first coil moves the first moving part in an optical axis direction, wherein the first magnet is overlapped with the second magnet in the optical axis direction, and wherein the length of the first magnet in the optical axis direction is longer than the length of the second magnet.

## Description

### [Technical Field]

The present embodiment relates to a camera video.

### [Background Art]

A camera device is a device that photographs a subject as a picture or video, and is being installed in optical devices such as smartphones, drones, and vehicles.

In order to improve image quality, a camera device is required to have a handshake correction (optical image stabilization, OIS) function that corrects image shake caused by user movement.

In the camera device, the handshake correction function is performed by moving the lens in a direction perpendicular to the optical axis. However, as the diameter of the lens increases in accordance with the recent trend toward high pixel density, the weight of the lens increases, and accordingly, there is a problem in that it is difficult to secure electromagnetic force for moving the lens in a limited space.

### [Detailed Description of the Invention]

### [Technical Subject]

The present embodiment is intended to provide a camera device that performs handshake correction by moving the image sensor.

The present embodiment is intended to provide a camera device that drives the image sensor in three axes: x-axis shift, y-axis shift, and z-axis rolling.

### [Technical Solution]

A camera device according to the present embodiment comprises: a fixed part; a first moving part comprising a bobbin and a lens being coupled to the bobbin and being disposed inside the fixed part; a second moving part comprising an image sensor and being disposed inside the fixed part; a first magnet and a second magnet being disposed in the fixed part; a first coil being disposed in the first moving part and being disposed at a position corresponding to the first magnet; and a second coil being disposed in the second moving part and being disposed at a position corresponding to the second magnet, wherein the first coil moves the first moving part in an optical axis direction, wherein the first magnet is overlapped with the second magnet in the optical axis direction, wherein the first magnet comprises a first unit magnet and a second unit magnet being disposed opposite to each other with respect to the optical axis, wherein a third unit magnet and a fourth unit magnet being disposed opposite to each other with respect to the optical axis, wherein the first unit magnet comprises a part being protruded to the outside of the bobbin in x-axis direction perpendicular to the optical axis direction, and wherein the part of the first unit magnet may be overlapped with the third unit magnet in the optical axis direction and in y-axis direction perpendicular to the x-axis direction.

The first magnet may comprise a part being protruded in the x-axis direction with respect to an imaginary plane comprising an outer side surface of the bobbin.

A first region of the first magnet which is not protruded may be overlapped with the bobbin in the x-axis direction.

A region of the second magnet below the first region of the first magnet may not be overlapped with the bobbin in the x-axis direction.

A camera device according to the present embodiment comprises: a fixed part; a first moving part comprising a bobbin and moving in an optical axis direction; a second moving part comprising an image sensor and moving in a direction perpendicular to the optical axis direction; a first magnet and a second magnet being disposed in the fixed part; a first coil being disposed in the first moving part and being disposed at a position corresponding to the first magnet; and a second coil being disposed in the second moving part and being disposed at a position corresponding to the second magnet, wherein the bobbin comprises first to fourth side surfaces, wherein the first magnet comprises a first unit magnet being disposed to correspond to the first side surface of the bobbin, a second unit magnet being disposed to correspond to the second side surface of the bobbin, and a third unit magnet being disposed to correspond to the third side surface of the bobbin, wherein the first side surface and the second side surface of the bobbin are located opposite to each other, and wherein a portion of the first unit magnet may be overlapped with the third unit magnet in y-axis direction perpendicular to the optical axis direction.

The first unit magnet is disposed between a first corner and a second corner of the fixed part and may be disposed closer to the first corner than the second corner.

The camera device according to the present embodiment comprises: an image sensor moving in a direction perpendicular to an optical axis direction; a housing being disposed in the image sensor; a bobbin being disposed inside the housing; a lens being coupled to the bobbin; a first magnet and a second magnet being disposed in the housing, wherein the housing comprises first to fourth side surfaces, wherein the second magnet comprises a first unit magnet being disposed to correspond to the first side surface of the housing, a second unit magnet being disposed to correspond to the second side surface of the housing, and a third unit magnet being disposed to correspond to the third side surface of the housing, wherein the first side surface and the second side surface of the housing are located opposite to each other, and wherein a part of the first unit magnet of the second magnet may be overlapped with the third unit magnet of the second magnet in y-axis direction perpendicular to the optical axis direction.

The camera device comprises: a first coil being disposed at a position corresponding to the first magnet; and a second coil being disposed at a position corresponding to the second magnet, wherein the first unit magnet of the second magnet comprises a part being protruded to the outside of the second coil in the optical axis direction and x-axis direction perpendicular to the y-axis direction.

The part of the first unit magnet of the second magnet may not be overlapped with the second coil in the optical axis direction.

The camera device according to the present embodiment comprises: a fixed part; a first moving part comprising a lens and being disposed inside the fixed part; a second moving part comprising an image sensor and being disposed inside the fixed part; a first magnet and a second magnet being disposed in the fixed part; a first coil being disposed in the first moving part and being disposed at a position corresponding to the first magnet; and a second coil being disposed in the second moving part and being disposed at a position corresponding to the second magnet, wherein the first coil moves the first moving part in an optical axis direction, wherein the first magnet is overlapped with the second magnet in the optical axis direction, wherein the first magnet comprises a first unit magnet and a second unit magnet being disposed opposite to each other with respect to the optical axis, a third unit magnet and a fourth unit magnet being disposed opposite to each other with respect to the optical axis, wherein the first unit magnet comprises a first surface facing the first coil, and wherein the first unit magnet may be overlapped with the third unit magnet in a direction perpendicular to the first surface.

The first moving part comprises a bobbin in which the first coil is disposed, and when viewed in a direction in which the first surface faces, the first magnet may comprise a part being protruded to the outer side of the bobbin in x-axis direction perpendicular to the optical axis direction.

When viewed in the direction in which the first surface faces, the length of the second coil in the horizontal direction may be greater than the length of the second magnet in the horizontal direction.

The part of the first magnet may be overlapped with the second coil in the optical axis direction.

The second magnet may comprise a part not being overlapped with the second coil in the optical axis direction.

The part of the first magnet may not be overlapped with the part of the second magnet in the optical axis direction.

The first magnet comprises: a first pole formed on a first surface facing the first coil; and a second pole formed on a second surface opposite to the first surface, wherein the second magnet may comprise a second pole being overlapped with the first pole of the first magnet in the optical axis direction, and a first pole being overlapped with the second pole of the first magnet in the optical axis direction.

When viewed from above, the second coil is disposed on an outer side of the bobbin, and when viewed in a direction in which the first surface faces, the second coil may comprise a part being disposed below the bobbin and being protruded further than the edge of the bobbin.

The third unit magnet may be disposed to be long in length in the direction perpendicular to the first surface.

The first unit magnet may not be overlapped with the second unit magnet in a direction in which the first surface faces.

The fixed part comprises a first side portion between the first corner portion and the second corner portion, the first unit magnet is disposed to be long in length in the first side portion in an arrangement direction of the first side portion, and the first unit magnet may be disposed closer to the first corner portion than to the second corner portion.

The fixed part comprises a third side portion between the first corner portion and the fourth corner portion, the third unit magnet is disposed to be long in length in the third side portion in an arrangement direction of the third side portion, and the third unit magnet may be disposed closer to the fourth corner portion than to the first corner portion.

The fixed part comprises: a first side portion and a second side portion being disposed opposite to each other; a third side portion and a fourth side portion being disposed opposite to each other; a first corner portion being disposed between the first side portion and the third side portion; and a second corner portion being disposed between the first side portion and the fourth side portion, wherein the first unit magnet is disposed in the first side portion of the fixed part and may be disposed closer to the first corner portion than the second corner portion.

The fixed part comprises: a third corner part disposed between the second side portion and the fourth side portion; and a fourth corner portion disposed between the second side portion and the third side portion, wherein the second unit magnet is disposed in the second side portion of the fixed part and may be disposed closer to the third corner portion than the fourth corner portion.

In the optical axis direction, the length of the first magnet may be greater than the length of the second magnet.

The first magnet may be in contact with the second magnet.

The first magnet may be bonded to the second magnet by an adhesive.

A yoke being disposed between the first magnet and the second magnet may be comprised.

The fixed part comprises: a first substrate being disposed below the image sensor; a base being disposed in the first substrate; and a housing being disposed in the base, wherein the first magnet and the second magnet may be disposed in the housing.

The first magnet may be a 2-pole magnet, and the second magnet may be a 4-pole magnet.

The first magnet may be a two-pole magnet, and the second magnet may be a two-pole magnet, and a neutral region having no polarity may be formed between the first magnet and the second magnet.

The first magnet is disposed to be long in length in a first direction perpendicular to the optical axis direction, and, in the first direction, the length of the first magnet may be longer than the length of the second magnet.

The length of the first magnet may be shorter than the length of the second magnet in the optical axis direction and a second direction perpendicular to the first direction.

In the first direction, the length of the second magnet may be longer than the length of the second coil.

The first coil is overlapped with the first magnet in a direction perpendicular to the optical axis direction, and the second coil may be overlapped with the second magnet in the optical axis direction.

When a driving current in a first direction is applied to the first coil, the first moving part moves downward in the optical axis direction to a first position; when a driving current in a second direction opposite to the first direction is applied to the first coil, the first moving part moves upward in the optical axis direction to a second position; the first coil may be overlapped with the first magnet in a direction perpendicular to the optical axis direction in both cases when the first moving part is located in the first position and when located in the second position.

A camera device according to the present embodiment comprises: a fixed part; a first moving part comprising a bobbin and a lens being coupled to the bobbin and being disposed inside the fixed part; a second moving part comprising an image sensor and being disposed inside the fixed part; a first magnet and a second magnet being disposed in the fixed part; a first coil being disposed in the first moving part and being disposed at a position corresponding to the first magnet; and a second coil being disposed in the second moving part and being disposed at a position corresponding to the second magnet, wherein the first coil moves the first moving part in an optical axis direction, wherein the first magnet being overlapped with the second magnet in the optical axis direction, wherein the fixed part comprises a first side portion between the first corner portion and the second corner portion, wherein the first magnet may comprise a first unit magnet being disposed to be long in length in the first side portion in an arrangement direction of the first side portion, and wherein the first unit magnet may be disposed closer to the first corner portion than the second corner portion.

The first magnet may be directly coupled to the second magnet or coupled with a yoke therebetween, and the first magnet may be larger than the second magnet.

The first magnet may be bonded to the second magnet by an adhesive.

The first magnet may be a 2-pole magnet, and the second magnet may be a 4-pole magnet.

Each of the first magnet and the second magnet comprises a first unit magnet and a second unit magnet being disposed opposite to each other with respect to an optical axis, and a third unit magnet and a fourth unit magnet being disposed opposite to each other with respect to the optical axis, wherein the first unit magnet comprises a first surface facing the first coil, and wherein the first unit magnet may be overlapped with the third unit magnet in a direction in which the first surface faces.

An optical device according to the present embodiment comprises a main body; a camera device being disposed in the main body; and a display being disposed in the main body and outputting a video or an image photographed by the camera device.

### [Advantageous Effects]

Through the present embodiment, the image sensor can be moved to perform the handshake correction function.

Through the magnet arrangement structure according to the present embodiment, electromagnetic force for driving AF and OIS can be enhanced.

Accordingly, since the size of the magnet may be reduced, the size and weight of the camera device may be reduced.

### [Brief Description of Drawings]

FIG. 1 is a perspective view of a camera device according to the present embodiment.
FIG. 2 is a perspective view of a state in which the cover member is omitted from the camera device according to the present embodiment.
FIG. 3 is a plan view of a camera device according to the present embodiment.
FIG. 4 is a cross-sectional view taken along line A-A of FIG. 3.
FIG. 5 is a cross-sectional view taken along line B-B of FIG. 3.
FIG. 6 is a cross-sectional view taken along line C-C of FIG. 3.
FIG. 7 is an exploded perspective view of a camera device according to the present embodiment.
FIG. 8 is an exploded perspective view of a camera device according to the present embodiment viewed from a different direction from FIG. 7.
FIG. 9 is an exploded perspective view of a first moving part and related configuration of a camera device according to the present embodiment.
FIG. 10 is an exploded perspective view of a second moving part and related configuration of a camera device according to the present embodiment.
FIG. 11 is a perspective view of a state in which a cover member is omitted from a camera device according to the present embodiment.
FIG. 12 is a side view of a state in which a cover member is omitted from a camera device according to the present embodiment.
FIG. 13 is a perspective view illustrating a second moving part, a fixing part, and a connection substrate of a camera device according to the present embodiment.
FIG. 14 is a perspective view illustrating a part of a second moving part and a connection substrate of a camera device according to the present embodiment.
"(a)" of FIG. 15 is a perspective view of a connection substrate and the metal plate of a camera device according to the present embodiment, and "(b)" of FIG. 15 is a cross-sectional view of a connection substrate and a metal plate of a camera device according to the present embodiment.
FIG. 16 is an exploded perspective view illustrating a connection substrate and a metal plate of a camera device according to the present embodiment separated.
FIG. 17 is a perspective view of a connection substrate and a metal plate of a camera device according to the present embodiment.
FIG. 18 is a perspective view illustrating a partial configuration of a bobbin and a driving unit of a camera device according to the present embodiment.
FIG. 19 is a perspective view of a magnet and a coil of a camera device according to the present embodiment.
FIG. 20 is a cross-sectional view of a magnet and a coil of a camera device according to the present embodiment.
FIG. 21a is a cross-sectional view of a magnet and a coil of a camera device according to a first modified embodiment.
FIG. 21b is a cross-sectional view of a magnet and a coil of a camera device according to a second modified embodiment.
FIG. 22 is a cross-sectional view of a magnet and a coil of a camera device according to a third modified embodiment.
FIG. 23 is a cross-sectional view of a magnet and a coil of a camera device according to fourth to seventh modified embodiments.
FIG. 24 is a cross-sectional view of a magnet and a coil of a camera device according to an eighth modified embodiment.
FIG. 25 is a cross-sectional view of a magnet and a coil of a camera device according to a ninth modified embodiment.
FIG. 26 is a cross-sectional view of a camera device according to the present embodiment. The wire of the camera device according to the present embodiment may be omitted in some drawings.
FIG. 27 is a diagram for explaining driving of an autofocus function of a camera device according to the present embodiment.

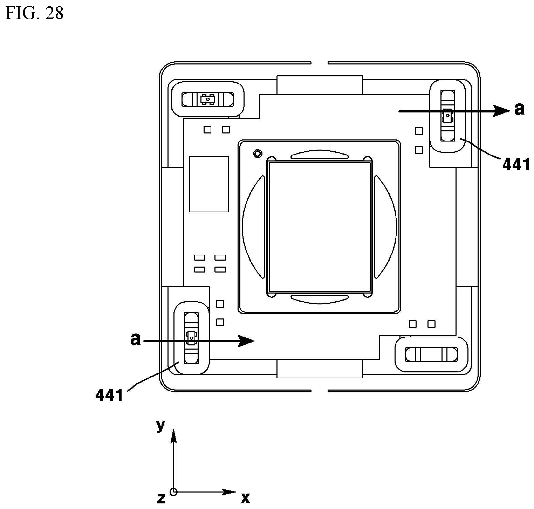

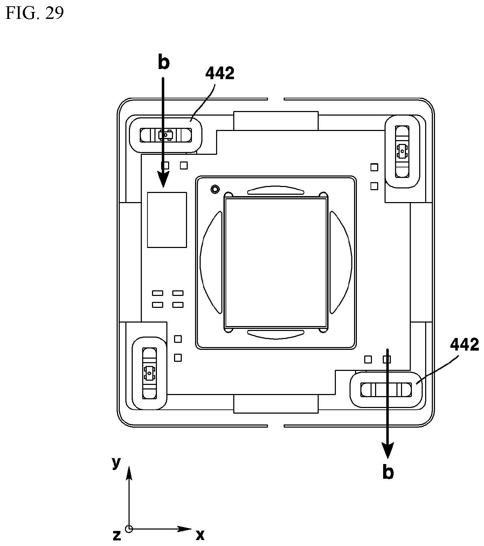

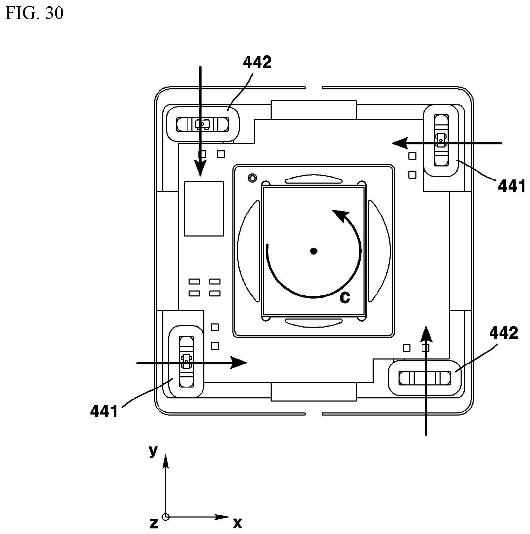

FIGS. 28 to 30 are diagrams for explaining the operation of the hand shake correction function of a camera device according to the present embodiment. In more detail, FIG. 28 is a diagram for explaining driving in which an image sensor of a camera device is shifted along the x-axis according to the present embodiment. FIG. 29 is a diagram for explaining driving in which an image sensor of a camera device according to the present embodiment is shifted along the y-axis. FIG. 30 is a view for explaining driving in which an image sensor of a camera device according to the present embodiment is rolled around the z-axis.
FIG. 31 is a perspective view of an optical device according to the present embodiment.
FIG. 32 is a perspective view of an optical device according to the present embodiment as viewed from a different direction from FIG. 31.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or arranged in "on (above)" or "below (under)" of each component, "on (above)" or "below (under)" means that it comprises not only the case where the two components are directly in contact with, but also the case where one or more other components are formed or arranged between the two components. In addition, when expressed as "on (above)" or "below (under)", the meaning of not only an upward direction but also a downward direction based on one component may be comprised.

Hereinafter, a camera device according to the present embodiment will be described with reference to the drawings.

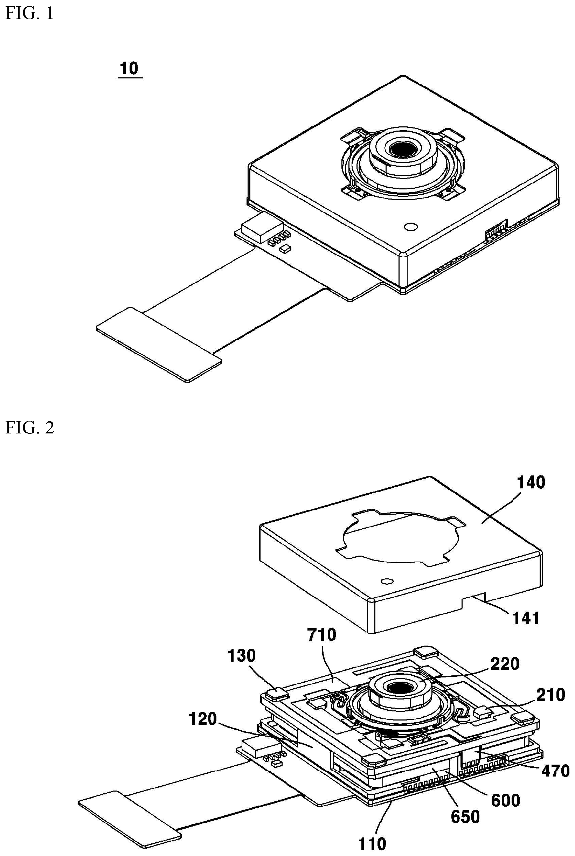

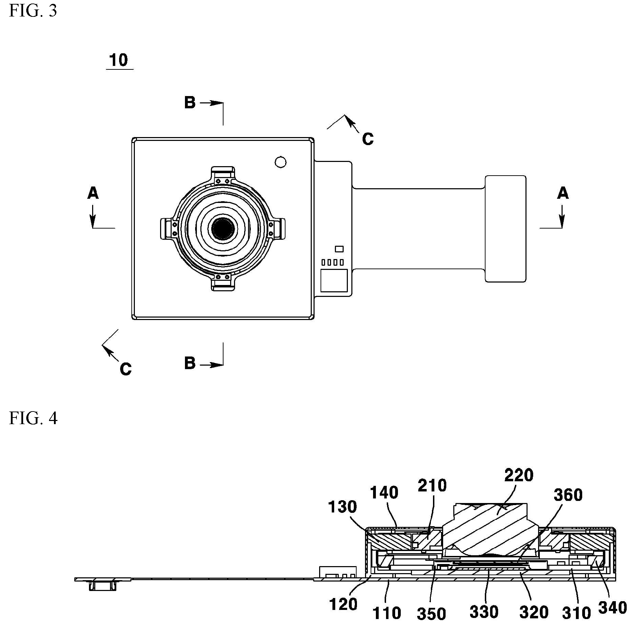

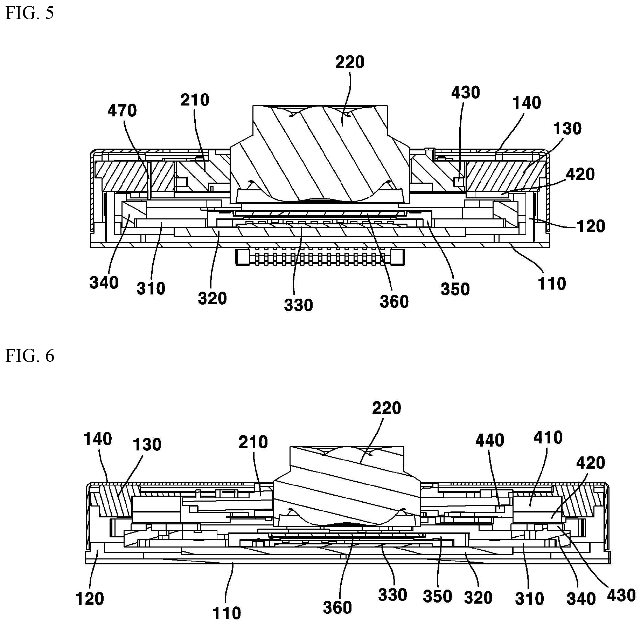

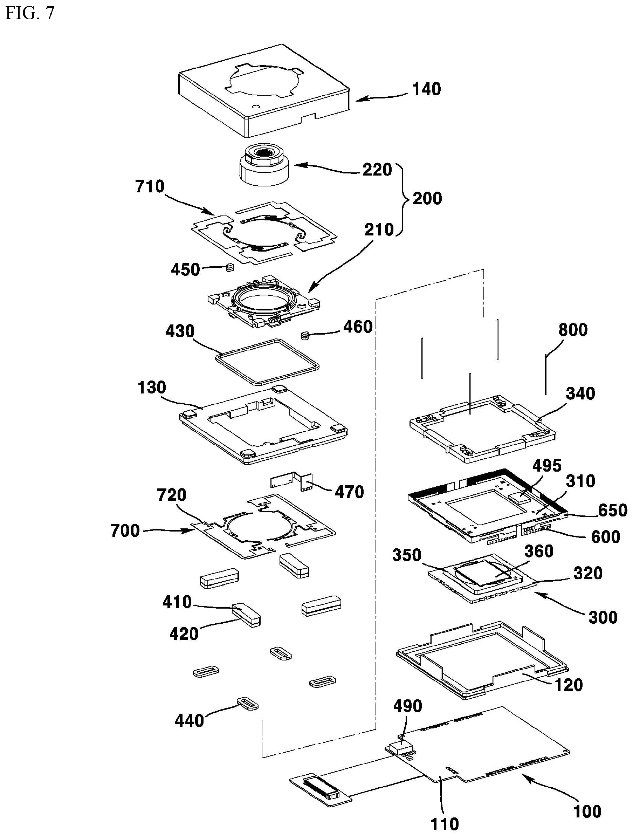

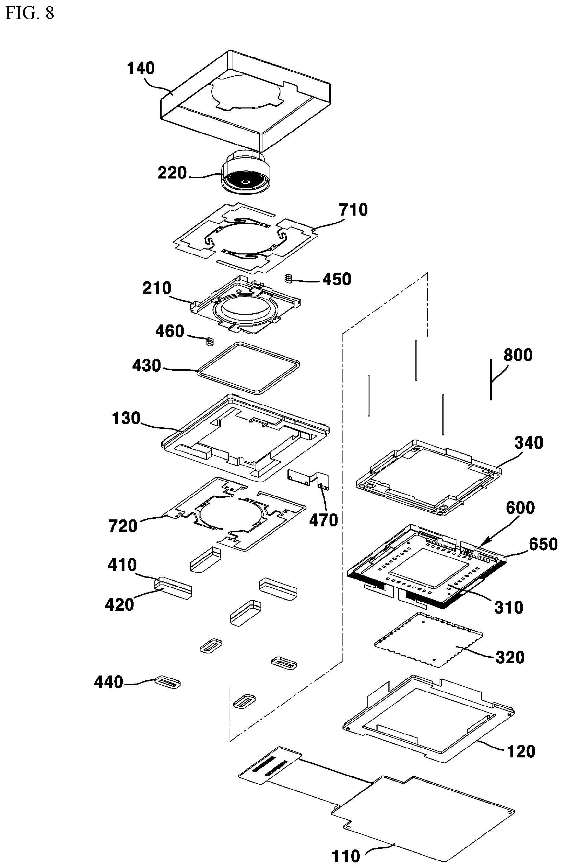

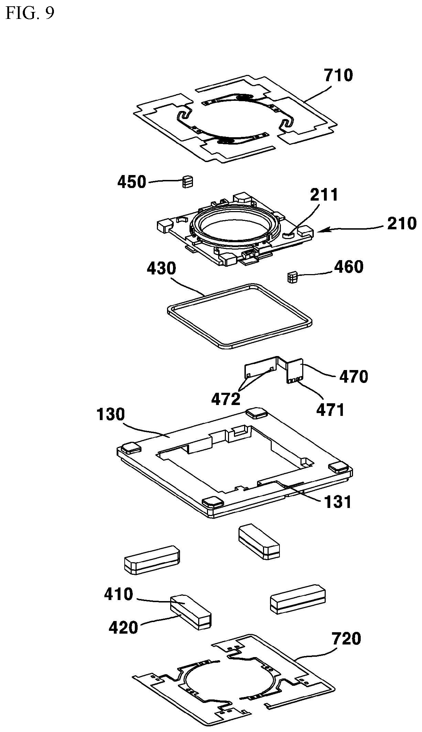

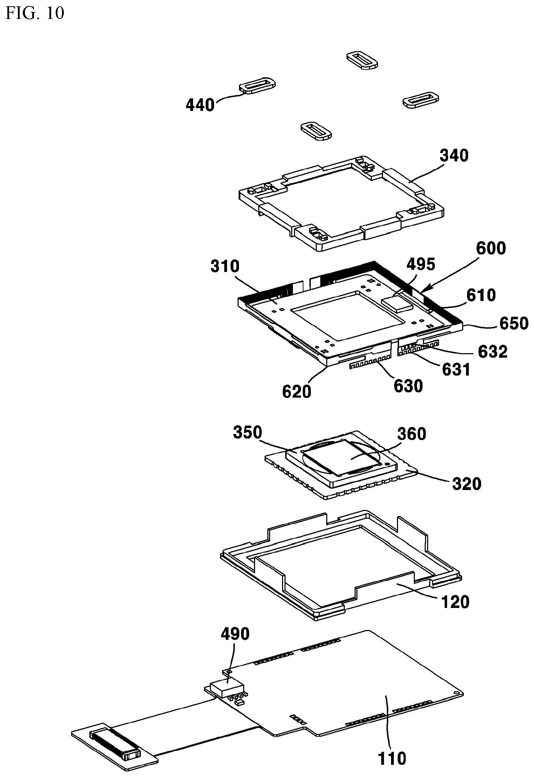

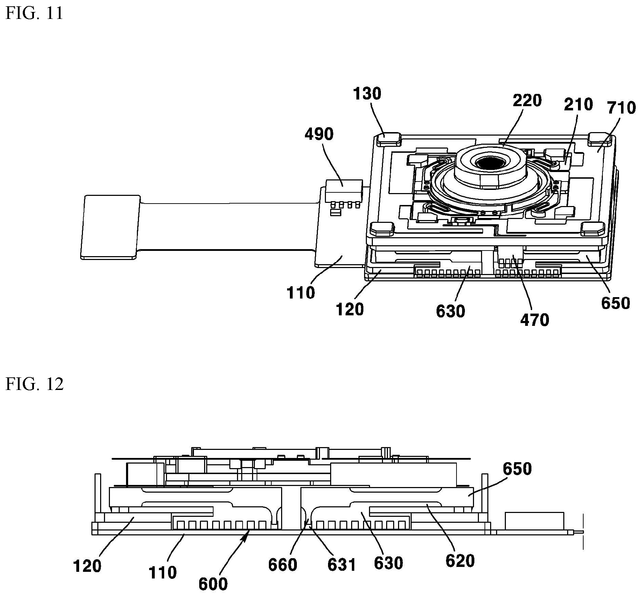

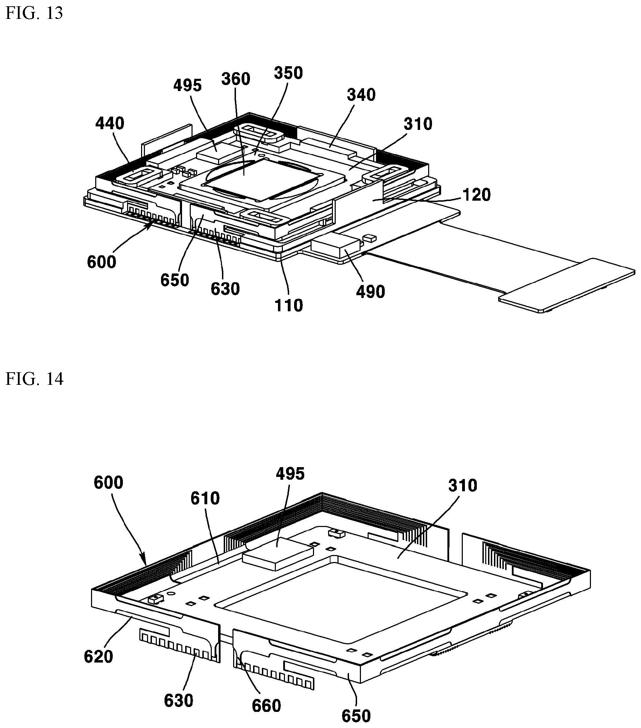

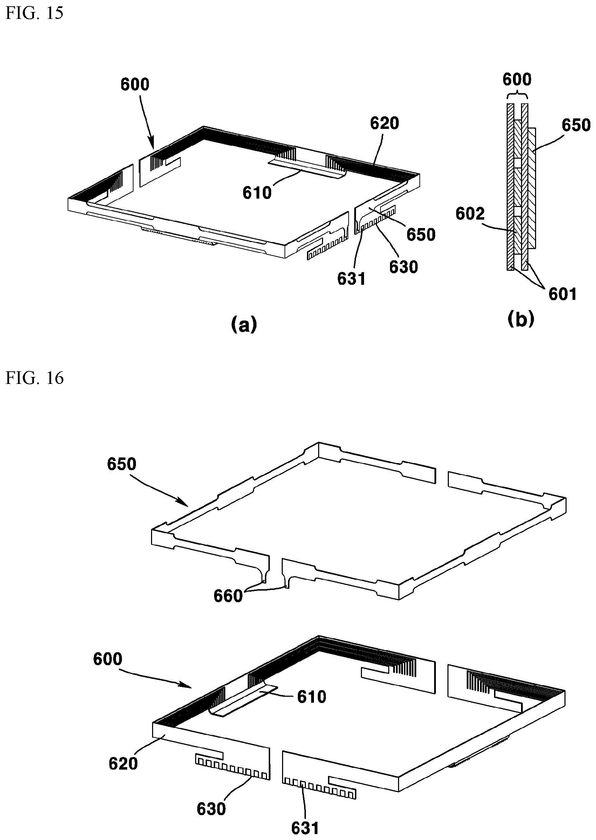

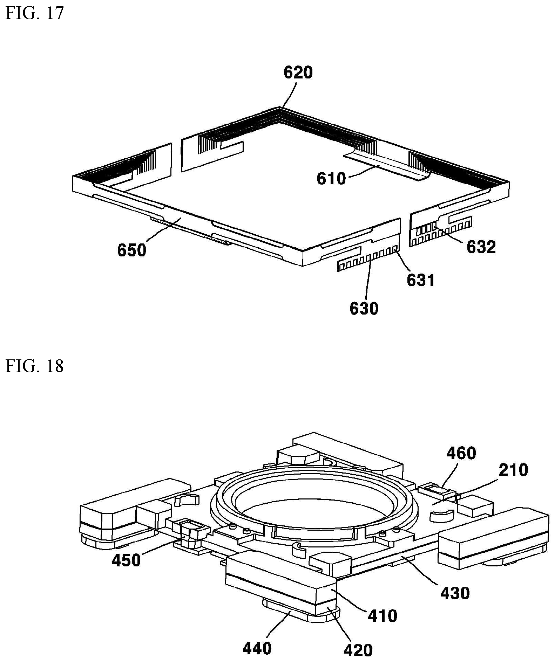

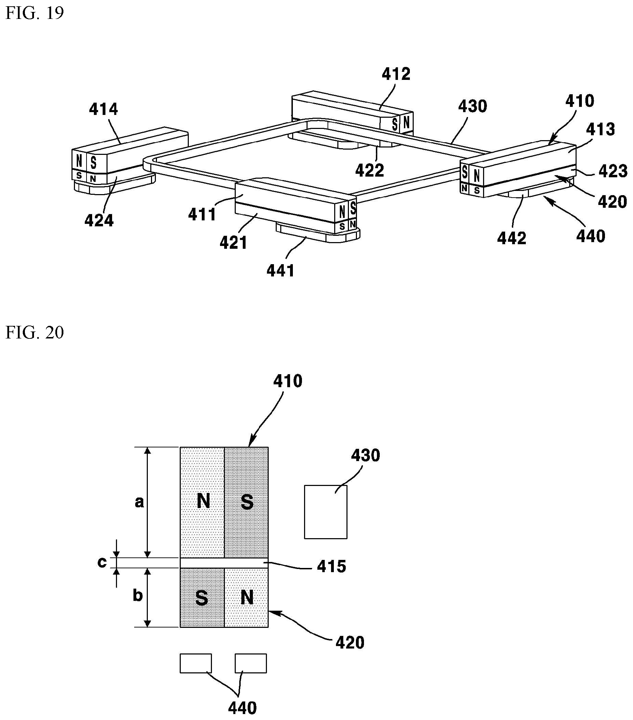

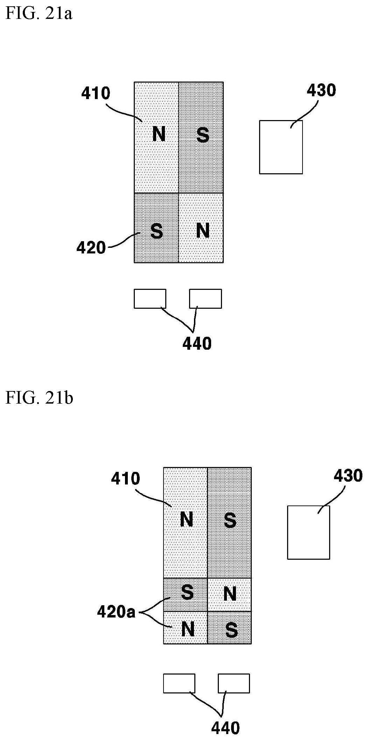

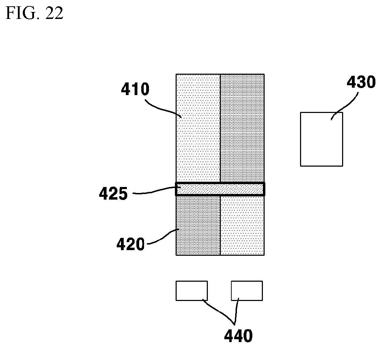

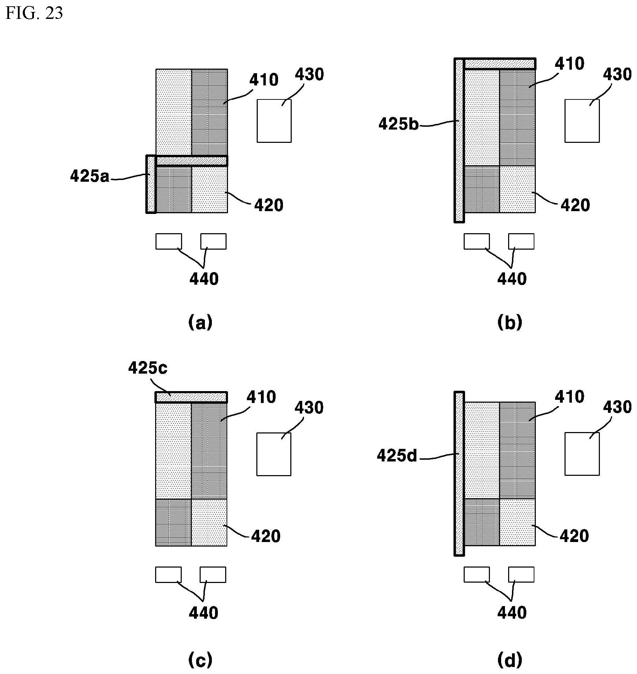

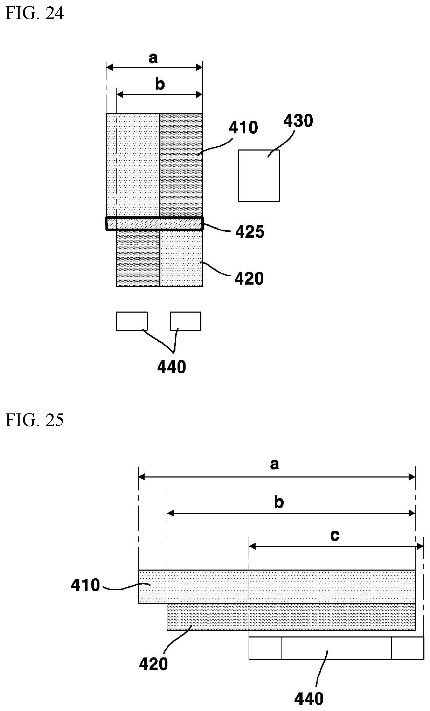

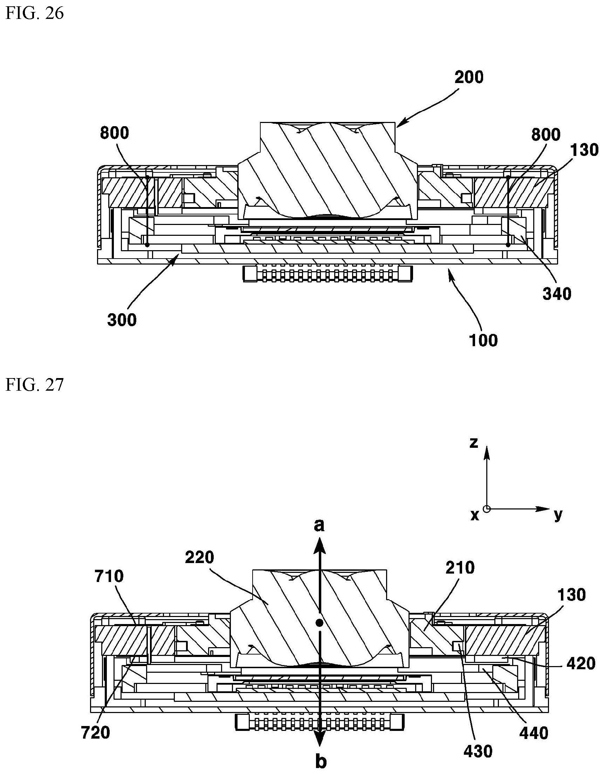

FIG. 1 is a perspective view of a camera device according to the present embodiment; FIG. 2 is a perspective view of a state in which the cover member is omitted from the camera device according to the present embodiment; FIG. 3 is a plan view of a camera device according to the present embodiment; FIG. 4 is a cross-sectional view taken along line A-A of FIG. 3; FIG. 5 is a cross-sectional view taken along line B-B of FIG. 3; FIG. 6 is a cross-sectional view taken along line C-C of FIG. 3; FIG. 7 is an exploded perspective view of a camera device according to the present embodiment; FIG. 8 is an exploded perspective view of a camera device according to the present embodiment viewed from a different direction from FIG. 7; FIG. 9 is an exploded perspective view of a first moving part and related configuration of a camera device according to the present embodiment; FIG. 10 is an exploded perspective view of a second moving part and related configuration of a camera device according to the present embodiment; FIG. 11 is a perspective view of a state in which a cover member is omitted from a camera device according to the present embodiment; FIG. 12 is a side view of a state in which a cover member is omitted from a camera device according to the present embodiment; FIG. 13 is a perspective view illustrating a second moving part, a fixing part, and a connection substrate of a camera device according to the present embodiment; FIG. 14 is a perspective view illustrating a part of a second moving part and a connection substrate of a camera device according to the present embodiment; "(a)" of FIG. 15 is a perspective view of a connection substrate and the metal plate of a camera device according to the present embodiment; "(b)" of FIG. 15 is a cross-sectional view of a connection substrate and a metal plate of a camera device according to the present embodiment; FIG. 16 is an exploded perspective view illustrating a connection substrate and a metal plate of a camera device according to the present embodiment separated; FIG. 17 is a perspective view of a connection substrate and a metal plate of a camera device according to the present embodiment; FIG. 18 is a perspective view illustrating a partial configuration of a bobbin and a driving unit of a camera device according to the present embodiment; FIG. 19 is a perspective view of a magnet and a coil of a camera device according to the present embodiment; FIG. 20 is a cross-sectional view of a magnet and a coil of a camera device according to the present embodiment; FIG. 21a is a cross-sectional view of a magnet and a coil of a camera device according to a first modified embodiment; FIG. 21b is a cross-sectional view of a magnet and a coil of a camera device according to a second modified embodiment; FIG. 22 is a cross-sectional view of a magnet and a coil of a camera device according to a third modified embodiment; FIG. 23 is a cross-sectional view of a magnet and a coil of a camera device according to fourth to seventh modified embodiments; FIG. 24 is a cross-sectional view of a magnet and a coil of a camera device according to an eighth modified embodiment; FIG. 25 is a cross-sectional view of a magnet and a coil of a camera device according to a ninth modified embodiment; and FIG. 26 is a cross-sectional view of a camera device according to the present embodiment. The wire of the camera device according to the present embodiment may be omitted in some drawings.

The camera device **10** may photograph any one or more of an image and a video. The camera device **10** may be a camera. The camera device **10** may be a camera module. The camera device **10** may be a camera assembly. The camera device **10** may be a camera unit. The camera device **10** may comprise a lens driving device. The camera device **10** may comprise a sensor driving device. The camera device **10** may comprise a voice coil motor (VCM). The camera device **10** may comprise an auto focus assembly. The camera device **10** may comprise a handshake correction assembly. The camera device **10** may comprise an autofocus device. The camera device **10** may comprise a handshake correction device. The camera device **10** may comprise an actuator. The camera device **10** may comprise a lens driving actuator. The camera device **10** may comprise a sensor driven actuator. The camera device **10** may comprise an auto focus actuator. The camera device **10** may comprise a handshake correction actuator.

The camera device **10** may comprise a fixed part **100**. The fixed part **100** may be a relatively fixed portion when the moving parts **200** and **300** move. The fixed part **100** may be a relatively fixed portion when one or more of a first moving part **200** and the second moving part **300** moves. The fixed part **100** may accommodate the first moving part **200** and the second moving part **300**. The fixed part **100** may be disposed at an outer side of the first moving part **200** and the second moving part **300**.

Although the first substrate **110** has been described as one configuration of the fixed part **100** throughout the specification, the first substrate **110** may be understood as a separate configuration from the fixed part **100**. The fixed part **100** may be disposed in the first substrate **110**. The fixed part **100** may be disposed on the first substrate **110**. The fixed part **100** may be disposed above the first substrate **110**.

The camera device **10** may comprise a first substrate **110**. The fixed part **100** may comprise a first substrate **110**. The first substrate **110** may be a main substrate. The first substrate **110** may be a substrate. The first substrate **110** may be a printed circuit board (PCB). The first substrate **110** may be connected to a power source of the optical device **1**. The first substrate **110** may comprise a connector connected to a power source of the optical device **1**. The first substrate 110 may be disposed below the image sensor **330**.

The camera device **10** may comprise a base **120**. The fixed part **100** may comprise a base **120**. The base **120** may be disposed in the first substrate **110**. The base **120** may be disposed on the first substrate **110**. The base **120** may be disposed above the first substrate **110**. The base **120** may be fixed to the first substrate **110**. The base **120** may be coupled to the first substrate **110**. The base **120** may be bonded to the first substrate **110** by an adhesive. The base **120** may be disposed between the first substrate **110** and a housing **130**.

The camera device **10** may comprise a housing **130**. The fixed part **100** may comprise a housing **130**. The housing **130** may be disposed in the base **120**. The housing **130** may be disposed on the base **120**. The housing **130** may be disposed above the base **120**. The housing **130** may be fixed to the base **120**. The housing **130** may be coupled to the base **120**. The housing **130** may be bonded to the base **120** by an adhesive. The housing **130** may be disposed on the first substrate **110**. The housing **130** may be disposed above the first substrate **110**. The housing **130** may be formed of a member separate from the base **120**. The housing **130** may be integrally formed.

The camera device **10** may comprise a cover member **140**. The fixed part **100** may comprise a cover member **140**. The cover member **140** may be coupled to the base **120**. The cover member **140** may be coupled to the housing **130**. The cover member **140** may be coupled to the first substrate **110**. The cover member **140** may be fixed to the base **120**. The cover member **140** may be fixed to the housing **130**. The cover member **140** may be fixed to the first substrate **110**. The cover member **140** may cover at least a portion of the base **120**. The cover member **140** may cover at least a portion of the housing **130**.

The cover member **140** may be a 'cover can' or a 'shield can'. The cover member **140** may be formed of a metal material. The cover member **140** may block electromagnetic interference (EMI). The cover member **140** may be electrically connected to the first substrate **110**. The cover member **140** may be grounded to the first substrate **110**.

The cover member **140** may comprise an upper plate. The cover member **140** may comprise a hole formed in the upper plate. The hole may be formed at a position corresponding to the lens **220**. The cover member **140** may comprise a side plate. The side plate may comprise a plurality of side plates. The side plate may comprise four side plates. The side plate may comprise first to fourth side plates. The side plate may comprise first and second side plates being disposed opposite to each other, and third and fourth side plates being disposed opposite to each other. The cover member **140** may comprise a plurality of corners between the plurality of side plates.

Although the cover member **140** has been described as one configuration of the fixed part **100** throughout the specification, the cover member **140** may be understood as a configuration separate from the fixed part **100**. The cover member **140** may be coupled to the fixed part **100**. The cover member **140** may cover the first moving part **200**.

The camera device **10** may comprise a first moving part **200**. The first moving part **200** may move with respect to the fixed part **100**. The first moving part **200** may move in an optical axis direction with respect to the fixed part **100**. The first moving part **200** may be disposed inside the fixed part **100**. The first moving part **200** may be movably disposed inside the fixed part **100**. The first moving part **200** may be arranged to be movable in an optical axis direction in the fixed part **100**. An auto focus (AF) function may be performed by moving the first moving part **200** in an optical axis direction with respect to the fixed part **100**. The first moving part **200** may be disposed on the second moving part **300**.

The camera device **10** may comprise a bobbin **210**. The first moving part **200** may comprise a bobbin **210**. The bobbin **210** may be disposed on the first substrate **110**. The bobbin **210** may be disposed above the first substrate **110**. The bobbin **210** may be disposed to be spaced apart from the first substrate **110**. The bobbin **210** may be disposed inside the housing **130**. The bobbin **210** may be disposed inside the housing **130**. At least a portion of the bobbin **210** may be accommodated in the housing **130**. The bobbin **210** may be movably disposed in the housing **130**. The bobbin **210** may be movably disposed on the housing **130** in an optical axis direction. The bobbin **210** may be coupled to the lens **220**. The bobbin **210** may comprise a hollow or a hole. The lens **220** may be disposed in a hollow or hole of the bobbin **210**. The outer circumferential surface of the lens **220** may be coupled to the inner circumferential surface of the bobbin **210**.

The camera device **10** may comprise a lens **220**. The first moving part **200** may comprise a lens **220**. The lens **220** may be coupled to the bobbin **210**. The lens **220** may be fixed to the bobbin **210**. The lens **220** may move integrally with the bobbin **210**. The lens **220** may be screw-coupled to the bobbin **210**. The lens **220** may be bonded to the bobbin **210** by an adhesive. The lens **220** may be disposed at a position corresponding to an image sensor **330**. The optical axis of the lens **220** may coincide with the optical axis of the image sensor **330**. The optical axis may be the z-axis. The lens **220** may comprise a plurality of lenses. The lens **220** may comprise a 5 or 6 lenses.

The camera device **10** may comprise a lens module. The lens module may be coupled to the bobbin **210**. The lens module may comprise a barrel and one or more lenses **220** being disposed inside the barrel.

The camera device **10** may comprise a second moving part **300**. The second moving part **300** may move with respect to the fixed part **100**. The second moving part **300** may move in a direction perpendicular to an optical axis direction with respect to the fixed part **100**. The second moving part **300** may be disposed inside the fixed part **100**. The second moving part **300** may be movably disposed inside the fixed part **100**. The second moving part **300** may be movably disposed inside the fixed part **100** in a direction perpendicular to an optical axis direction. A handshake correction (OIS) function may be performed by moving the second moving part **300** in a direction perpendicular to an optical axis direction with respect to the fixed part **100**. The second moving part **300** may be disposed between the first moving part **200** and the first substrate **110**.

The camera device **10** may comprise a second substrate **310**. The second moving part **300** may comprise a second substrate **310**. The second substrate **310** may be a substrate. The second substrate **310** may be a printed circuit board (PCB). The second substrate **310** may be disposed between the first moving part **200** and the first substrate **110**. The second substrate **310** may be disposed between the bobbin **210** and the first substrate **110**. The second substrate **310** may be disposed between the lens **220** and the first substrate **110**. The second substrate **310** may be spaced apart from the fixed part **100**. The second substrate **310** may be spaced apart from the fixed part **100** in a direction perpendicular to an optical axis direction and the optical axis direction. The second substrate **310** may move in a direction perpendicular to an optical axis direction. The second substrate **310** may be electrically connected to the image sensor **330**. The second substrate **310** may move integrally with the image sensor **330**. The second substrate **310** may comprise a hole. The image sensor **330** may be disposed in the hole of the second substrate **310**.

The second substrate **310** may comprise a terminal **311**. The terminal **311** may be disposed on a lower surface of the second substrate **310**. The terminal **311** may be coupled to the terminal **321** of the sensor substrate **320**. The second substrate **310** may be formed separately from the sensor substrate **320**. The second substrate **310** may be formed separately from the sensor substrate **320** to be coupled thereto. The terminal **321** of the sensor substrate **320** may be soldered to the terminal **311** of the second substrate **310.**

The camera device **10** may comprise a sensor substrate **320**. The second moving part **300** may comprise a sensor substrate **320**. The sensor substrate **320** may be a substrate. The sensor substrate **320** may be a printed circuit board (PCB). The sensor substrate **320** may be coupled to the image sensor **330**. The sensor substrate **320** may be coupled to the second substrate **310**.

The sensor substrate **320** may comprise a terminal **321**. The terminal **321** of the sensor substrate **320** may be coupled to the terminal **311** of the second substrate **310**. The sensor substrate **320** may be coupled to a lower surface of the second substrate **310**. The sensor substrate **320** may be disposed below the second substrate **310**. The sensor substrate **320** while being coupled with the image sensor **330** may be coupled below the second substrate **310**.

The camera device **10** may comprise an image sensor **330.** The second moving part **300** may comprise an image sensor **330**. The image sensor **330** may be disposed in the sensor substrate **320**. The image sensor **330** may be disposed between the sensor substrate **320** and a sensor base **350**. The image sensor **330** may be electrically connected to the second substrate **310**. The image sensor **330** may move integrally with the second substrate **310**.

Light passing through the lens **220** and the filter **360** may be incident to the image sensor **330** to form an image. The image sensor **330** may be electrically connected to the sensor substrate **320**, the second substrate **310**, and the first substrate **110**. The image sensor **330** may comprise an effective image region. The image sensor **330** may convert light being irradiated to the effective image region into an electrical signal. The image sensor **330** may comprise any one or more among a charge coupled device (CCD), a metal oxide semi-conductor (MOS), a CPD, and a CID.

The camera device **10** may comprise a holder **340**. The second moving part **300** may comprise a holder **340**. The holder **340** may be formed of an insulating material. The holder **340** may be disposed in the second substrate **310**. The holder **340** may be disposed on the second substrate **310**. The holder **340** may be disposed above the second substrate **310**. The holder **340** may be fixed to the second substrate **310**. The holder **340** may be coupled to the second substrate **310**. The holder **340** may comprise a hollow or a hole in which the image sensor **330** is disposed. A second coil **440** may be disposed in the holder **340**. The holder **340** may comprise a protrusion on which the second coil **440** is wound. The holder **340** may comprise a hole in which the Hall sensor **445** is disposed.

The camera device **10** may comprise a sensor base **350**. The second moving part **300** may comprise a sensor base **350**. The sensor base **350** may be disposed in the sensor substrate **320**. The sensor base **350** may comprise a hole formed at a position corresponding to the image sensor **330**. The sensor base **350** may comprise a groove in which the filter **360** is disposed.

The camera device **10** may comprise a filter **360**. The second moving part **300** may comprise a filter **360**. The filter **360** may be disposed between the lens **220** and the image sensor **330.** The filter **360** may be disposed in the sensor base **350**. The filter **360** may block light of a specific frequency band from being incident on the image sensor **330** among the light passing through the lens **220**. The filter **360** may comprise an infrared cut filter. The filter **360** may block infrared rays from being incident on the image sensor **330**.

The camera device **10** may comprise a driving unit. The driving unit may move the moving parts **200** and **300** with respect to the fixed part **100**. The driving unit may perform an auto focus (AF) function. The driving unit may perform a handshake correction (OIS) function. The driving unit may move the lens **220**. The driving unit may move the image sensor **330**. The driving unit may comprise a magnet and a coil. The driving unit may comprise a shape memory alloy (SMA).

The camera device **10** may comprise a first driving unit. The first driving unit may be an AF driving unit. The first driving unit may move the first moving part **200** in an optical axis direction. The first driving unit may move the bobbin **210** in an optical axis direction. The lens **220** may be moved in an optical axis direction. The first driving unit may perform an auto focus (AF) function. The first driving unit may move the first moving part **200** in an upward direction of the optical axis direction. The first driving unit may move the first moving part **200** downward direction of the optical axis direction.

The camera device **10** may comprise a second driving unit. The second driving unit may be an OIS driving unit. The second driving unit may move the second moving part **300** in a direction perpendicular to the optical axis direction. The second driving unit may move the second substrate **310** in a direction perpendicular to the optical axis direction. The second driving unit may move the sensor substrate **320** in a direction perpendicular to the optical axis direction. The second driving unit may move the image sensor **330** in a direction perpendicular to the optical axis direction. The second driving unit may move the holder **340** in a direction perpendicular to the optical axis direction. The second driving unit may move the sensor base **350** in a direction perpendicular to the optical axis direction. The second driving unit may move the filter **360** in a direction perpendicular to the optical axis direction. The second driving unit may perform a handshake correction (OIS) function.

The second driving unit may move the second moving part **300** in a first direction perpendicular to the optical axis direction. The second driving unit may move the second moving part **300** in a second direction perpendicular to the optical axis direction and the first direction. The second driving unit may rotate the second moving part **300** about the optical axis.

In the present embodiment, the first driving unit may comprise a first coil **430**. The second driving unit may comprise a second coil **440**. The first driving unit may comprise a first magnet **410** being used to interact with the first coil **430**. The second driving unit may comprise a second magnet **420** being used to interact with the second coil **440**. As a modified embodiment, the first driving unit and the second driving unit may comprise coils being individually controlled and a common magnet.

The camera device **10** may comprise a first magnet **410**. The driving unit may comprise a first magnet **410**. The first driving unit may comprise a first magnet **410**. The first magnet **410** may be a magnet. The first magnet **410** may be a permanent magnet. The first magnet **410** may be used for auto focus (AF).

The first magnet **410** may be disposed in the fixed part **100**. The first magnet **410** may be fixed to the fixed part **100**. The first magnet **410** may be coupled to the fixed part **100**. The first magnet **410** may be bonded to the fixed part **100** by an adhesive. The first magnet **410** may be disposed in the housing **130**. The first magnet **410** may be fixed to the housing **130**. The first magnet **410** may be coupled to the housing **130**. The first magnet **410** may be bonded to the housing **130** by an adhesive. The first magnet **410** may be disposed at a corner of the housing **130**. The first magnet **410** may be disposed to be biased toward a corner of the housing **130**.

The first magnet **410** may be a two-pole magnetized magnet comprising one N-pole region and one S-pole region. As a modified embodiment, the first magnet **410** may be a 4-pole magnetized magnet comprising two N-pole regions and two S-pole regions. The inner surface of each unit magnet of the first magnet **410** may be an S pole and an outer surface may be an N pole. At this time, the inner surface of each unit magnet of the second magnet **420** may be an N pole and an outer surface may be an S pole. Conversely, the inner surface of each unit magnet of the first magnet **410** may be an N pole and an outer surface may be an S pole. At this time, the inner surface of each unit magnet of the second magnet **420** may be an S pole and an outer surface may be an N pole. As illustrated in FIG. 21b, the inner surface of the magnet is disposed in the order of S pole, N pole, and S pole from top to bottom, and the outer surface of the magnet may be disposed in the order of N pole, S pole, and N pole from top to bottom.

The first magnet **410** may comprise a plurality of magnets. The first magnet **410** may comprise four magnets. The first magnet **410** may comprise first to fourth unit magnets **411**, **412**, **413**, and **414**. The first to fourth unit magnets **411**, **412**, **413**, and **414** may be disposed symmetrically with respect to the optical axis. The first to fourth unit magnets **411**, **412**, **413**, and **414** may be formed to have the same size and shape.

The camera device **10** may comprise a second magnet **420**. The driving unit may comprise a second magnet **420**. The second driving unit may comprise a second magnet **420**. The second magnet **420** may be a magnet. The second magnet **420** may be a permanent magnet. The second magnet **410** may be used for handshake correction (OIS).

The second magnet **420** may be disposed in the fixed part **100**. The second magnet **420** may be fixed to the fixed part **100**. The second magnet **420** may be coupled to the fixed part **100**. The second magnet **420** may be bonded to the fixed part **100** by an adhesive. The second magnet **420** may be disposed in the housing **130**. The second magnet **420** may be fixed to the housing **130**. The second magnet **420** may be coupled to the housing **130**. The second magnet **420** may be bonded to the housing **130** by an adhesive. The second magnet **420** may be disposed at a corner of the housing **130**. The second magnet **420** may be disposed to be biased toward a corner of the housing **130**.r

The second magnet **420** may be a two-pole magnetized magnet comprising one N-pole region and one S-pole region. As a modified embodiment, the second magnet **420** may be a 4-pole magnetized magnet comprising two N-pole regions and two S-pole regions.

The second magnet **420** may comprise a plurality of magnets. The second magnet **420** may comprise four magnets. The second magnet **420** may comprise first to fourth unit magnets **421**, **422**, **423**, and **424**. The first to fourth unit magnets **421**, **422**, **423**, and **424** may be disposed symmetrically with respect to the optical axis. The first to fourth unit magnets **421**, **422**, **423**, and **424** may be formed to have the same size and shape.

The present embodiment may relate to an arrangement of an AF driver for moving the lens **220** and an OIS driver for shifting the image sensor **330**. At this time, the vertical length of the AF magnet may be greater than the vertical length of the OIS magnet. When viewed from the top and side surfaces, the OIS magnet and the OIS coil may be protruded more outward than the bobbin **210** in x-axis, be eccentrically disposed at a corner, and overlapped with adjacent magnets in y-axis.

However, for AF driving, the AF magnet may be protruded more toward the center of the side portion than the corner so as to face the AF coil disposed in the bobbin **210** as much as possible. Accordingly, the OIS magnet may have more portions being protruded from the corner to the center side of the side portion than the OIS coil.

The AF magnet can also be protruded with the same size as the OIS magnet is protruded further toward the corner. However, even if it is not protruded, the performance may be irrelevant.

AF magnet and OIS magnet are made integrally or can be made to have the same size for ease of assembly.

In addition, the OIS magnet can couple the AF magnet and the OIS magnet with 4 poles.

The first magnet **410** may be overlapped with the second magnet **420** in an optical axis direction. The first magnet **410** may be overlapped with the second magnet **420** in a vertical direction. The length of the first magnet **410** in an optical axis direction may be longer than the length of the second magnet **420**. In a modified embodiment, the length of the first magnet **410** in an optical axis direction may be the same as the length of the second magnet **420**. As another modified embodiment, the length of the first magnet **410** in an optical axis direction may be shorter than the length of the second magnet **420**.r

The first magnet **410** and the second magnet **420** may be disposed in an integrated type housing **130**. The first magnet **410** may be directly coupled to the second magnet **420**. The first magnet **410** may be coupled with the second magnet **420** and the yoke **425** interposed therebetween.

The first magnet **410** may be larger than the second magnet **420**. The first magnet **410** may have a larger volume than the second magnet **420**. The first magnet **410** may have a larger cross-sectional area than the second magnet **420**. As a modified embodiment, the first magnet **410** may be formed to have the same size as the second magnet **420**. In another modified embodiment, the first magnet **410** may be smaller than the second magnet **420**.r

The first magnet **410** may be a two-pole magnet. The second magnet **420** may be a two-pole magnet. However, each of the first magnet **410** and the second magnet **420** may be a part of a single 4-pole magnet. The first magnet **410** and the second magnet **420** may be separately formed and coupled. Or, the first magnet **410** and the second magnet **420** may constitute a single magnet.

The first magnet **410** may comprise a first unit magnet **411** and a second unit magnet **412** disposed opposite to each other with respect to an optical axis, and a third unit magnet **413** and a fourth unit magnet **414** disposed opposite to each other with respect to an optical axis. The first unit magnet **411** may comprise a first surface facing the first coil **430**. The first unit magnet **411** may be overlapped with the third unit magnet **413** in a direction in which the first surface faces. The first unit magnet **411** may not be overlapped with the second unit magnet **412** in a direction in which the first surface faces.

The first unit magnet **411** may comprise a part being protruded to the outer side of the bobbin **210** in x-axis direction perpendicular to the optical axis direction. A part of the first unit magnet **411** may be overlapped with the third unit magnet **413** in an optical axis direction and y-axis direction perpendicular to the x-axis direction.

The second magnet **420** may comprise a first unit magnet **421** and a second unit magnet **422** being disposed opposite to each other with respect to an optical axis, and a third unit magnet **423** and a fourth unit magnet **424** being disposed opposite to each other with respect to an optical axis. The first unit magnet **421** may comprise a first surface facing the first coil **430**. The first unit magnet **421** may be overlapped with the third unit magnet **423** in a direction in which the first surface faces. The first unit magnet **421** may not be overlapped with the second unit magnet **422** in a direction in which the first surface faces.

The second magnet **420** may not be overlapped with the bobbin **210** in a direction perpendicular to an optical axis direction. The second magnet **420** may comprise a part not being overlapped with the second coil **440** in an optical axis direction. The first unit magnet **421** of the second magnet **420** may comprise a part being protruded to the outer side of the second coil **440** in an optical axis direction and x-axis direction perpendicular to the y-axis direction. The first unit magnet **421** of the second magnet **420** may comprise a part not being overlapped with the second coil **440** in an optical axis direction.

The first coil **430** may be overlapped with the first magnet **410** in a direction perpendicular to the optical axis direction. The second coil **440** may be overlapped with the second magnet **420** in an optical axis direction. When a driving current in a first direction is applied to the first coil **430**, the first moving part **200** may be moved downward in an optical axis direction to a first position. When a driving current in a second direction opposite to the first direction is applied to the first coil **430**, the first moving part **200** may be moved upward in an optical axis direction to a second position. The first coil **430** may be overlapped with the first magnet **410** in a direction perpendicular to the optical axis direction both when the first moving part **200** is positioned at the first position and at the second position. That is, the first coil **430** may be overlapped with the first magnet **410** in a direction perpendicular to the optical axis direction in the entire section of the stroke of the first moving part **200** in an up-down direction.

As illustrated in FIG. 20, a neutral region having a neutral polarity may be disposed between the first magnet **410** and the second magnet **420** in the present embodiment. A neutral region having a neutral polarity may be formed between the first magnet **410** and the second magnet **420**.r

As illustrated in FIG. 21a, in a first modified embodiment, the first magnet **410** may be in contact with the second magnet **420**. The first magnet **410** may be bonded to the second magnet **420** by an adhesive. The first magnet **410** may be coupled to the second magnet **420.** The first magnet **410** may be fixed to the second magnet **420**. The first magnet **410** may be disposed in the second magnet **420**.

As illustrated in FIG. 21b, in a second modified embodiment, the first magnet **410** may be a two-pole magnet. The second magnet **420a** may be a 4-pole magnet.

As illustrated in FIG. 22, in a third modified embodiment, the camera device **10** may comprise a yoke **425**. The yoke **425** may be disposed between the first magnet **410** and the second magnet **420**.r

As illustrated in (a) of FIG. 23, in a fourth modified embodiment, the camera device **10** may comprise a yoke **425a**. The yoke **425a** may comprise a first portion disposed on the outer side surface of the second magnet **420** and a second portion being disposed between the first magnet **410** and the second magnet **420**. The second portion may be bent from the first portion.

As illustrated in (b) of FIG. 23, in a fifth modified embodiment, the camera device **10** may comprise a yoke **425b**. The yoke **425b** may comprise a first portion being disposed on outer side surfaces of the first magnet **410** and the second magnet **420**, and a second portion being disposed on an upper surface of the first magnet **410**. The second portion may be bent from the first portion. The first magnet **410** and the second magnet **420** may be in contact with each other.

As illustrated in (c) of FIG. 23, in a sixth modified embodiment, the camera device **10** may comprise a yoke **425c**. The yoke **425c** may be disposed on an upper surface of the first magnet **410**. The yoke **425c** may be formed of a flat plate. The first magnet **410** and the second magnet **420** may be in contact with each other.

As illustrated in (d) of FIG. 23, in a seventh modified embodiment, the camera device **10** may comprise a yoke **425d**. The yoke **425d** may be disposed on outer side surfaces of the first magnet **410** and the second magnet **420**. The yoke **425d** may be formed of a flat plate. The first magnet **410** and the second magnet **420** may be in contact with each other.

As illustrated in FIG. 24, in an eighth modified embodiment, the first magnet **410** may be disposed to be long in length in a first direction perpendicular to the optical axis direction. In the optical axis direction and the second direction perpendicular to the first direction, the length of the first magnet **410** (refer to **a** of FIG. 24) may be longer than the length of the second magnet **420** (refer to **b** of FIG. 24).

As illustrated in FIG. 25, in a ninth modified embodiment, the first magnet **410** may be disposed to be long in length in a first direction perpendicular to the optical axis direction. The length of the first magnet **410** in a first direction (refer to **a** of FIG. 25) may be longer than the length of the second magnet **420** (refer to **b** of FIG. 25). In a first direction, the length **b** of the second magnet **420** may be longer than the length of the second coil **440** (refer to **c** of FIG. 25).

The present embodiment can solve the electromagnetic force optimization problem. As the driving stroke of the OIS and the driving stroke of the AF are increased and the size of the image sensor is increased, it may be necessary to optimize the electromagnetic force. The present embodiment may comprise a structure in which a coil and a magnet for driving OIS are separated from a coil and a magnet for AF.

In order to increase the electromagnetic force of OIS and AF, a double-pole magnetized magnet may be used as illustrated in FIG. 20. In this case, it can have a higher electromagnetic force compared to the case of OIS using mono-pole. In the present embodiment, the first coil **430**, which is the AF coil, is made smaller in a heightwise direction compared to the first magnet **410** so that the first coil **430** is overlapped with the first magnet **410** in the entire moving section, so that the linearity can be maintained in the moving section. A neutral zone may be formed between the first magnet **410** and the second magnet **420**.r

Most of the AF electromagnetic force may be generated by the first coil **430** and the first magnet **410**. Most of the OIS electromagnetic force may be generated by the second coil **440** and the second magnet **420**. However, in the case of the OIS, there is an effect of increasing the electromagnetic force of the OIS by the first magnet **410**.r

In a modified embodiment, the first magnet **410** and the second magnet **420** can be used by attaching two magnets. At this time, the neutral zone between the two magnets may be deleted to improve the electromagnetic force. In the present embodiment, the first magnet **410**, the second magnet **420**, and the neutral zone **415** may be formed of one magnet. At this time, the first magnet **410** may be a first magnet portion and the second magnet **420** may be a second magnet portion.

In a modified embodiment, the electromagnetic force can be further increased by adding a yoke. Furthermore, it is possible to adjust the electromagnetic force for driving the OIS and AF through the position of the yoke. Since the AF driving stroke needs to be covered, the height of the first magnet **410** may be higher than the height of the second magnet **420**. The second magnet **420** may have a greater height evacuation width. Although the height of the second magnet **420** is desirable to be high, the overall height of the camera device **10** may also be increased, which may cause a problem.

As a modified embodiment, the driving magnet may be formed as a single magnet.

The camera device **10** may comprise a first coil **430**. The driving unit may comprise a first coil **430**. The first coil **430** may be disposed in the first moving part **200**. The first coil **430** may be fixed to the first moving part **200**. The first coil **430** may be coupled to the first moving part **200**. The first coil **430** may be bonded to the first moving part **200** by an adhesive. The first coil **430** may be disposed in the bobbin **210**. The first coil **430** may be fixed to the bobbin **210**. The first coil **430** may be coupled to the bobbin **210**. The first coil **430** may be bonded to the bobbin **210** by an adhesive. The first coil **430** may be electrically connected to a driver IC **480**. The first coil **430** may be electrically connected to a lower elastic member **720**, a sensing substrate **470**, and the driver IC **480**. The first coil **430** may receive current from the driver IC **480**.

The first coil **430** may be disposed at a position corresponding to the driving magnet **410**. The first coil **430** may be disposed in the bobbin **210** at a position corresponding to the driving magnet **410**. The first coil **430** may face the driving magnet **410**. The first coil **430** may comprise a surface facing the driving magnet **410**. The first coil **430** may be disposed adjacent to the driving magnet **410**. The first coil 430 may interact with the driving magnet **410**. The first coil **430** may electromagnetically interact with the driving magnet **410**.

The first coil **430** may move the first moving part **200** in an optical axis direction. The first coil **430** may move the bobbin **210** in an optical axis direction. The first coil **430** may move the lens **220** in an optical axis direction. The first coil **430** may move the first moving part **200** in an upward direction of the optical axis direction. The first coil **430** may move the bobbin **210** in an upward direction of the optical axis direction. The first coil **430** may move the lens **220** in an upward direction of the optical axis direction. The first coil **430** may move the first moving part **200** in a downward direction of the optical axis direction. The first coil **430** may move the bobbin **210** in a downward direction of the optical axis direction. The first coil **430** may move the lens **220** in a downward direction of the optical axis direction.

The camera device **10** may comprise a second coil **440**. The driving unit may comprise a second coil **440**. The second coil **440** may be disposed in the second moving part **300**. The second coil **440** may be fixed to the second moving part **300**. The second coil **440** may be coupled to the second moving part **300**. The second coil **440** may be bonded to the second moving part **300** by an adhesive. The second coil **440** may be disposed in the holder **340**. The second coil **440** may be fixed to the holder **340**. The second coil **440** may be coupled to the holder **340**. The second coil **440** may be bonded to the holder **340** by an adhesive. The second coil **440** may be wound around the protrusion of the holder **340** and disposed. The second coil **440** may be disposed on the holder **340**. The second coil **440** may be electrically connected to the second substrate **310**. Both ends of the second coil **440** may be soldered to the second substrate **310**. The second coil **440** may be electrically connected to the driver IC **495**. The second coil **440** may be electrically connected to the second substrate **310** and the driver IC **495**. The second coil **440** may receive current from the driver IC **495**.

The second coil **440** may be disposed at a position corresponding to the second magnet **420**. The second coil **440** may be disposed at a position corresponding to the second magnet **420** in the holder **340**. The second coil **440** may face the second magnet **420**. The second coil **440** may comprise a surface facing the second magnet **420**. The second coil **440** may be disposed adjacent to the second magnet **420**. The second coil **440** may interact with the second magnet **420**. The second coil **440** may electromagnetically interact with the second magnet **420**.

The second coil **440** may move the second moving part **300** in a direction perpendicular to the optical axis direction. The second coil **440** may move the second substrate **310** in a direction perpendicular to the optical axis direction. The second coil **440** may move the sensor substrate **320** in a direction perpendicular to the optical axis direction. The second coil **440** may move the image sensor **330** in a direction perpendicular to the optical axis direction. The second coil **440** may move the holder **340** in a direction perpendicular to the optical axis direction. The second coil **440** may rotate the second moving part **300** about an optical axis. The second coil **440** may rotate the second substrate **310** about an optical axis. The second coil **440** may rotate the sensor substrate **320** about an optical axis. The second coil **440** may rotate the image sensor **330** about an optical axis. The second coil **440** may rotate the holder **340** about an optical axis.

The second coil **440** may comprise a plurality of coils. The second coil **440** may comprise four coils. The second coil **440** may comprise a coil for shift in x-axis. The second coil **440** may comprise a coil for shift in y-axis.

The second coil **440** may comprise a second-first coil **441**. The second-first coil **441** may be a first sub-coil. The second-first coil **441** may be a coil for x-axis shift. The second-first coil **441** may move the second moving part **300** in the x-axis direction. The second-first coil **441** may be disposed in length along the y-axis. The second-first coil **441** may comprise a plurality of coils. The second-first coil **441** may comprise two coils. The two coils of the second-first coil **441** may be electrically connected to each other. The second-first coil **441** may comprise a connection coil connecting the two coils. In this case, the two coils of the second-first coil **441** may receive current together. Or, the two coils of the second-first coil **441** may be electrically separated from each other to receive current individually.

The second coil **440** may comprise a second-second coil **442**. The second-second coil **442** may be a second sub-coil. The second-second coil **442** may be a coil for y-axis shift. The second-second coil **442** may move the second moving part **300** in the y-axis direction. The second-second coil **442** may be disposed in length along the x-axis. The second-first coil **441** may comprise a plurality of coils. The second-second coil **442** may comprise two coils. Two coils of the second-second coil **442** may be electrically connected to each other. The second-second coil **442** may comprise a connection coil connecting the two coils. In this case, the two coils of the second-second coil **442** may receive current together. Or, the two coils of the second-second coil **442** may be electrically separated from each other to receive current individually.

The camera device **10** may comprise a Hall sensor **445**. The Hall sensor **445** may be disposed in the second substrate **310**. The Hall sensor **445** may be disposed in a hole of the holder **340**. The Hall sensor **445** may comprise a Hall device (Hall IC). The Hall sensor **445** may detect the driving magnet **410**. The Hall sensor **445** may detect a magnetic force of the driving magnet **410**. The Hall sensor **445** may face the driving magnet **410**. The Hall sensor **445** may be disposed at a position corresponding to the driving magnet **410**. The Hall sensor **445** may be disposed adjacent to the driving magnet **410**. The Hall sensor **445** may detect the position of the second moving part **300**. The Hall sensor **445** may detect the movement of the second moving part **300**. The Hall sensor **445** may be disposed in the hollow of the second coil **440**. The sensed value detected by the Hall sensor **445** may be used to feedback the handshake correction operation. The Hall sensor **445** may be electrically connected to the driver IC **495**.

The Hall sensor **445** may comprise a plurality of Hall sensors. The Hall sensor **445** may comprise three Hall sensors. The Hall sensor **445** may comprise first to third Hall sensors. The first Hall sensor may detect the displacement of the second moving part **300** in the x-axis direction. The second Hall sensor may detect the displacement of the second moving part **300** in the y-axis direction. The third Hall sensor may detect the rotation of the second moving part **300** about the z-axis alone or together with any one or more of the first Hall sensor and the second Hall sensor.

The camera device **10** may comprise a sensing magnet **450**. The sensing magnet **450** may be disposed in the first moving part **200**. The sensing magnet **450** may be fixed to the first moving part **200**. The sensing magnet **450** may be coupled to the first moving part **200**. The sensing magnet **450** may be bonded to the first moving part **200** by an adhesive. The sensing magnet **450** may be disposed in the bobbin **210**. The sensing magnet **450** may be fixed to the bobbin **210**. The sensing magnet **450** may be coupled to the bobbin **210**. The sensing magnet **450** may be bonded to the bobbin **210** by an adhesive. The sensing magnet **450** may be formed to have a smaller size than the driving magnet **410**. Through this, the influence of the sensing magnet **450** on driving may be minimized.

The sensing magnet **450** may be disposed opposite to a correction magnet **460**. The sensing magnet **450** and the correction magnet **460** may be disposed opposite to each other in the first moving part **200**. The sensing magnet **450** and the correction magnet **460** may be disposed opposite to each other in the bobbin **210**.

The camera device **10** may comprise a correction magnet **460**. The correction magnet **460** may be a compensation magnet. The correction magnet **460** may be disposed in the first moving part **200**. The correction magnet **460** may be fixed to the first moving part **200**. The correction magnet **460** may be coupled to the first moving part **200**. The correction magnet **460** may be bonded to the first moving part **200** by an adhesive. The correction magnet **460** may be disposed in the bobbin **210**. The correction magnet **460** may be fixed to the bobbin **210**. The correction magnet 460 may be coupled to the bobbin **210**. The correction magnet **460** may be bonded to the bobbin **210** by an adhesive. The correction magnet **460** may be formed to have a size smaller than that of the driving magnet **410**. Through this, the influence of the correction magnet **460** on driving can be minimized. In addition, the correction magnet **460** may be disposed on the opposite side of the sensing magnet **450** to form a magnetic force balance with the sensing magnet **450**. Through this, the tilt that may be generated by the sensing magnet **450** can be prevented.

The camera device **10** may comprise a sensing substrate **470**. The sensing substrate **470** may be a substrate. The sensing substrate **470** may be a printed circuit board (PCB). The sensing substrate **470** may be a flexible substrate. The sensing substrate **470** may be an FPCB. The sensing substrate **470** may be coupled to the first substrate **110**. The sensing substrate **470** may be connected to the first substrate **110**. The sensing substrate **470** may be electrically connected to the first substrate **110**. The sensing substrate **470** may be soldered to the first substrate **110**. The sensing substrate **470** may be disposed in the housing **130**. The sensing substrate **470** may be fixed to the housing **130**. The sensing substrate **470** may be coupled to the housing **130**. The housing **130** may comprise a groove or hole having a shape corresponding to that of the sensing substrate **470**. The sensing substrate **470** may be disposed in a groove or hole of the housing **130**.

The camera device **10** may comprise a driver IC **480**. The driver IC **480** may be an AF driver IC. The driver IC **480** may be electrically connected to the first coil **430**. The driver IC **480** may apply a current to the first coil **430** to perform AF driving. The driver IC **480** may apply a power source to the first coil **430**. The driver IC **480** may apply a current to the first coil **430**. The driver IC **480** may apply a voltage to the first coil **430**. The driver IC **480** may be disposed in the sensing substrate **470**. The driver IC **480** may be disposed at a position corresponding to the sensing magnet **450**. The driver IC **480** may be disposed to face the sensing magnet **450**. The driver IC **480** may be disposed adjacent to the sensing magnet **450**.

The driver IC **480** may comprise a sensor. The sensor may comprise a Hall IC. The sensor may be disposed at a position corresponding to the sensing magnet **450**. The sensor may be disposed to face the sensing magnet **450**. The sensor may be disposed adjacent to the sensing magnet **450**. The sensor may detect the sensing magnet **450**. The sensor may detect the magnetic force of the sensing magnet **450**. The sensor may detect the position of the first moving part **200**. The sensor may detect the movement of the first moving part **200**. The detected value detected by the sensor may be used for feedback of autofocus driving.

The camera device **10** may comprise a gyro sensor **490.** The gyro sensor **490** may be disposed in the first substrate **110**. The gyro sensor **490** may detect the shaking of the camera device **10**. The gyro sensor **490** may detect an angular velocity or a linear velocity caused by shaking of the camera device **10**. The gyro sensor **490** may be electrically connected to the driver IC **495**. The shaking of the camera device **10** detected by the gyro sensor **490** may be used to drive a handshake correction (OIS).

The camera device **10** may comprise a driver IC **495**. The driver IC **495** may be an OIS driver IC. The driver IC **495** may be electrically connected to the second coil **440**. The driver IC **495** may apply a current to the second coil **440** to perform OIS driving. The driver IC **495** may apply a power source to the second coil **440**. The driver IC **495** may apply a current to the second coil **440**. The driver IC **495** may apply a voltage to the second coil **440**. The driver IC **495** may be disposed in the second substrate **310**.

The camera device **10** may comprise a connection member. The connection member may be an interposer. The connection member may support the movement of the second moving part **300**. The connection member may movably support the second moving part **300**. The connection member may connect the second moving part **300** and the fixed part **100**. The connection member may connect the first substrate **110** and the second substrate **310**. The connection member may electrically connect the first substrate **110** and the second substrate **310**. The connection member may guide the movement of the second moving part **300**. The connection member may guide the second moving part **300** to move in a direction perpendicular to the optical axis direction. The connection member may guide the second moving part **300** to rotate about the optical axis. The connection member may limit the movement of the second moving part **300** in an optical axis direction.

The connection member may comprise a connection substrate **600**. The connection member may comprise an elastic member for connecting the fixed part **100** and the second moving part **300**. The connection member may comprise a leaf spring. The connection member may comprise a wire **800**. The connection member may comprise a ball disposed between the fixed part **100** and the second moving part **300.**

The camera device **10** may comprise a connection substrate **600**. The connection substrate **600** may be a connection part. The connection substrate **600** may be a connection member. The connection substrate **600** may be a stretchable substrate. The connection substrate **600** may be a flexible substrate. The connection substrate **600** may be a flexible printed circuit board. The connection substrate **600** may be a flexible printed circuit board (FPCB). The connection substrate **600** may have flexibility in at least a part. The second substrate **310** and the connection substrate **600** may be integrally formed.

The connection substrate **600** may support the second moving part **300**. The connection substrate **600** may support the movement of the second moving part **300**. The connection substrate **600** may movably support the second moving part **300**. The connection substrate **600** may connect the second moving part **300** and the fixed part **100**. The connection substrate **600** may connect the first substrate **110** and the second substrate **310**. The connection substrate **600** may electrically connect the first substrate **110** and the second substrate **310**. The connection substrate **600** may guide the movement of the second moving part **300**. The connection substrate **600** may guide the second moving part **300** to move in a direction perpendicular to the optical axis direction. The connection substrate **600** may guide the second moving part **300** to rotate about the optical axis. The connection substrate **600** may limit the movement of the second moving part **300** in an optical axis direction. A portion of the connection substrate **600** may be coupled to the base **120**.

The connection substrate **600** may comprise two connection substrates **600** being spaced apart from each other and formed symmetrically. Two connection substrates **600** may be disposed at both sides of the second substrate **310**. The connection substrate **600** may be bent a total of 6 times to connect the first substrate **110** and the second substrate **310**.

The connection substrate **600** may comprise a first region connected to the second substrate **310** and being bent in an optical axis direction. The first region is connected to the second substrate **310** and may be bent in an optical axis direction. The first region is connected to the second substrate **310** and may be extended in an optical axis direction. The first region may be connected to the second substrate **310** and extended by being bent in an optical axis direction. The connection substrate **600** may comprise a second region being extended from the first region. The connection substrate **600** may comprise a third region that is bent in a direction perpendicular to the optical axis direction in the second region. The third region may be bent in a direction perpendicular to the optical axis direction in the second region. The third region may be extended in a direction perpendicular to the optical axis direction in the second region. The third region may be bent and extended in a direction perpendicular to the optical axis direction in the second region.

The connection substrate **600** may comprise a connection part **610** comprising a first region. The connection substrate **600** may comprise an extension part **620** comprising a second region and a third region. The connection substrate **600** may comprise a connection part **610** being connected to the second substrate **310**. The connection substrate **600** may comprise an extension part **620** being extended from the connection part **610**. The connection substrate **600** may comprise a terminal part **630** being connected to the extension part **620** and comprising a terminal.

The connection substrate **600** may comprise a connection part **610**. The connection part **610** may be connected to the second moving part **300**. The connection part **610** may be coupled to the second moving part **300**. The connection part **610** may be fixed to the second moving part **300**. The connection part **610** may be connected to the second substrate **310**. The connection part **610** may be coupled to the second substrate **310**. The connection part **610** may be fixed to the second substrate **310**. The connection part **610** may comprise a first bending region that is bent in an optical axis direction. The connection part **610** may comprise a first bending region being cut and bent in the optical axis direction. The connection part **610** may comprise a first bending region being extended in an optical axis direction. The connection part **610** may comprise a first region that is bent in an optical axis direction with respect to the second substrate **310** and a second region being extended from the first region and bent in a direction perpendicular to the optical axis direction.

The connection substrate **600** may comprise an extension part **620**. The extension part **620** may connect the connection part **610** and the terminal part **630**. The extension part **620** may be extended from the connection part **610**. The extension part **620** may comprise a second bending region that is bent in a direction perpendicular to the optical axis direction. The bending angle of the extension part **620** may be 80 to 100 degrees. The bending angle of the extension part **620** may be 85 to 95 degrees.

Any one of the bending region of the connection part **610** and the bending region of the extension part **620** may be referred to as a first bending region, and the other may be referred to as a second bending region.

The connection substrate **600** may comprise a terminal part **630**. The terminal part **630** may be coupled to the fixed part **100**. The terminal part **630** may be fixed to the fixed part **100**. The terminal part **630** may be coupled to the first substrate **110**. The terminal part **630** may be connected to the first substrate **110**. The terminal part **630** may be soldered to the first substrate **110**. The terminal part **630** may be fixed to the first substrate **110**. The terminal part **630** may be coupled to the base **120**. The terminal part **630** may be fixed to the base **120**. The terminal part **630** may comprise a terminal. The terminal may be coupled to the first substrate **110.**

In the present embodiment, the camera device **10** may comprise a flexible substrate. The flexible substrate may connect the fixed part **100** and the second moving part **300**. The flexible substrate may comprise a connection part **610** being connected to the second moving part **300**, an extension part **620** being extended from the connection part **610**, and a terminal part **630** being connected to the extension part **620** and comprising a terminal.

In the present embodiment, the connection substrate **600** may comprise a first part being coupled to the first substrate **110**, a second part being coupled to the second substrate **310**, and a third part connecting the first part and the second part. The third part may be disposed parallel to an optical axis at least in part. The third part may be formed so that the length in an optical axis direction is longer than the thickness. The second part of the connection substrate **600** may be disposed parallel to the second substrate **310** at least in part. The third part of the connection substrate **600** may be disposed perpendicular to the second part at least in part. The third part of the connection substrate **600** may be bent roundly in the portion corresponding to the corner of the second substrate **310**. The second substrate **310** may comprise a first side surface and a second side surface being disposed opposite to each other, and a third side surface and a fourth side surface being disposed opposite to each other. The second part of the connection substrate **600** may be coupled with the first side surface and the second side surface of the second substrate **310**. The first part of the connection substrate **600** may be coupled to a portion of the first substrate **110** corresponding to the third side surface and the fourth side surface of the second substrate **310**.

The camera device **10** may comprise a metal plate **650**. The connection member may comprise a metal plate **650**. The connection substrate **600** may comprise a metal plate **650**. However, the metal plate **650** may be understood as a configuration separate from the connection substrate **600**. The metal plate **650** may be a metal member. The metal plate **650** may be a metal part. The metal plate **650** may be a metal layer. The metal plate **650** may be a metal thin film. The metal plate **650** may be formed of metal. The metal plate **650** may be formed of an alloy. The metal plate **650** may be formed of a copper alloy. The metal plate **650** may be formed of a conductive material. The metal plate **650** may be distinguished from the conductive layer **602** of the connection substrate **600**. The metal plate **650** may be formed of a material different from the conductive layer **602** of the connection substrate **600**. The metal plate **650** may be coupled to the connection substrate **600**. The metal plate **650** may have elasticity.

In an optical axis direction, at least in part, the length of the metal plate **650** may be the same as the length of the extension part **620**. The metal plate **650** may be extended to have the same length as the extension part **620** in an optical axis direction. The thickness of the metal plate **650** may be the same as the thickness of the connection substrate **600**. The thickness of the metal plate **650** may be thicker than the thickness of the connection substrate **600**. The thickness of the conductive layer **602** may be 7 to 50 µm. The thickness of the metal plate **650** may be 20 to 150 µm. The metal plate **650** may be connected to the ground GND to be used for impedance matching and noise suppression.

At least a portion of the metal plate **650** may be disposed in the extension part **620** of the connection substrate **600**. The extension part **620** may comprise a bending region that is bent in a direction perpendicular to the optical axis direction. At this time, the metal plate **650** may be disposed in the bending region. The metal plate **650** may be disposed on an inner surface of the extension part **620**. The metal plate **650** may be disposed on an outer surface of the extension part **620**.

The metal plate **650** may be formed of a conductive material. The metal plate **650** may be electrically connected to the second substrate **310**. The metal plate **650** may be electrically connected to the image sensor **330**. The metal plate **650** may be electrically connected to the driver IC **495**. The metal plate **650** may be connected to the terminal **631** of the connection substrate **600**. The metal plate **650** may be electrically connected to the terminal **631** of the connection substrate **600**. The metal plate **650** may be in direct contact with the terminal **631** of the connection substrate **600**. The metal plate **650** may be coupled to the terminal **631** of the connection substrate **600** by a conductive member. The metal plate **650** may be used as a ground (GND). The metal plate **650** may be connected to the ground terminal of the connection substrate **600**. The metal plate **650** may be electrically connected to the first substrate **110**. In this case, the number of power connection patterns of the connection substrate **600** may be reduced.

The metal plate **650** may comprise a body part disposed in the extension part **620** and a protruded part **660** being extended downward from the body part to the terminal **631** of the connection substrate **600**. The protruded part **660** may be a protrusion. The protruded part **660** may be connected to the terminal **631** of the connection substrate **600**. The protruded part **660** may be electrically connected to the terminal **631** of the connection substrate **600**. The protruded part **660** may be coupled to the terminal **631** of the connection substrate **600**. The protruded part **660** may be coupled to the terminal **631** of the connection substrate **600** by a conductive member. The protruded part **660** may be fixed to the terminal **631** of the connection substrate **600**. The protruded part **660** may be in direct contact with the terminal **631** of the connection substrate **600**. The protruded part **660** may be connected to a ground terminal of the connection substrate **600**.r

As illustrated in (b) of FIG. 15, the connection substrate **600** may comprise two insulation layers **601** and a conductive layer **602** disposed between the two insulation layers **601**. The metal plate **650** may comprise a material different from that of the conductive layer **602**. The conductive layer **602** may be a conduction layer. The conductive layer **602** may be formed of copper. The metal plate **650** may be formed of a copper alloy. The metal plate **650** may comprise at least one of an alloy of copper and titanium and an alloy of copper and nickel. The thickness of the metal plate **650** may be thicker than the thickness of the conductive layer **602**. The thickness of the conductive layer **602** may correspond to the distance between the two insulation layers **601**. In the present embodiment, the connection substrate **600** may be formed only with two insulation layers **601** and a conductive layer **602** disposed between the two insulation layers **601**. The insulation layer **601** may be formed of polyimide (Pi).

The camera device **10** may comprise an insulation layer. The connection member may comprise an insulation layer. The connection substrate **600** may comprise an insulation layer. The insulation layer may cover the metal plate **650**. An insulation layer may be disposed on an outer surface of the metal plate **650**. The metal plate **650** may be disposed between the insulation layers. The insulation layer may comprise an insulation material. The insulation layer may be formed of polyimide (Pi). The insulation layer may protect the metal plate **650**.r

The present embodiment can solve the signal processing problem of the image sensor **330**. The present embodiment may provide a method for connecting the signals and power of the image sensor **330**, the Hall sensor **445**, and the driver IC **495** to the first substrate **110**, which is the main PCB. The connection substrate **600** may be coupled to a metal plate **650** formed of a material of copper (Cu) or a copper-titanium alloy (cu + Ti).

The camera device **10** may comprise an elastic member **700**. The elastic member **700** may be a support member. The elastic member **700** may connect the fixed part **100** and the first moving part **200**. The elastic member **700** may elastically connect the fixed part **100** and the first moving part **200**. The elastic member **700** may connect the bobbin **210** and the housing **130**. The elastic member **700** may elastically connect the bobbin **210** and the housing **130**. The elastic member **700** may movably support the first moving part **200** with respect to the fixed part **100**. The elastic member **700** may be deformed when the first moving part **200** moves. When the movement of the first moving part **200** is finished, the elastic member **700** may position the first moving part **200** to an initial position through a restoring force (elastic force). The elastic member **700** may comprise a leaf spring. The elastic member **700** may comprise a spring. The elastic member **700** may have elasticity at least in part. The elastic member **700** may provide a restoring force (elastic force) to the first moving part.

The camera device **10** may comprise an upper elastic member **710**. The elastic member **700** may comprise an upper elastic member **710**. The upper elastic member **710** may be disposed on the lower elastic member **720**. The upper elastic member **710** may comprise an inner side portion coupled to the bobbin **210**. The inner side portion of the upper elastic member **710** may be coupled to an upper portion of the bobbin **210**. The inner side portion of the upper elastic member **710** may be disposed on an upper surface of the bobbin **210**. The upper elastic member **710** may comprise an outer side portion coupled to the housing **130**. The outer side portion of the upper elastic member **710** may be coupled to a lower portion of the housing **130.** The outer side portion of the upper elastic member **710** may be disposed on a lower surface of the housing **130**. The upper elastic member **710** may comprise a connection part connecting the inner side portion and the outer side portion. The connection part may have elasticity.

The camera device **10** may comprise a lower elastic member **720**. The elastic member **700** may comprise a lower elastic member **720**. The lower elastic member **720** may be disposed below the upper elastic member **710**. The lower elastic member **720** may comprise an inner side portion being coupled to the bobbin **210**. An inner side portion of the lower elastic member **720** may be coupled to a lower portion of the bobbin **210**. An inner side portion of the lower elastic member **720** may be disposed on a lower surface of the bobbin **210**. The lower elastic member **720** may comprise an outer side portion being coupled to the housing **130**. An outer side portion of the lower elastic member **720** may be coupled to an upper portion of the housing **130**. An outer side portion of the lower elastic member **720** may be disposed on an upper surface of the housing **130**. The lower elastic member **720** may comprise a connection part connecting the inner side portion and the outer side portion. The connection part may have elasticity.

The lower elastic member **720** may comprise a plurality of lower portion elastic units. The lower elastic member **720** may comprise first and second lower portion elastic units **720-1** and **720-2**. The lower elastic member **720** may comprise two lower portion elastic units **720-1** and **720-2**. The two lower portion elastic units **720-1** and **720-2** are spaced apart from each other to electrically connect the sensing substrate **470** and the first coil **430**.

The camera device **10** may comprise a wire **800**. The wire **800** may be a wire spring. The wire **800** may be an elastic member. The wire **800** may be a leaf spring in a modified embodiment. The wire **800** may connect the fixed part **100** and the second moving part **300**. The wire **800** may elastically connect the fixed part **100** and the second moving part **300**. The wire **800** may connect the housing **130** and the second substrate **310**. The wire **800** may elastically connect the housing **130** and the second substrate **310**. The wire **800** may movably support the second moving part **300**. The wire **800** may support the second moving part **300** to move or rotate in a direction perpendicular to the optical axis direction.

An interposer that can simultaneously perform the roles of: electrical connection for connecting the signals of the image sensor **330** and driver IC **495** of sensor-shift OIS to the first substrate **110** which is the main PCB; and mechanical works on impact reliability and the like, may be absolutely necessary. The present embodiment may comprise an interposer that can secure the same characteristics. The interposer may be a connection member. The interposer may comprise a connection substrate **600** and a metal plate **650**. The sensing substrate **470** may be electrically connected to the connection substrate **600**. The connection substrate **600** may be an interposer PCB. The metal plate **650** may be formed of a copper material. The metal plate **650** may be formed of an alloy of copper (Cu) and titanium (Ti). The metal plate **650** may be a spring. The metal plate **650** may be an elastic member. The metal plate **650** may have elasticity. The spring can be used for reinforcing the ground (GND). Even when the allowable current needs to be high due to an increase in the size of the image sensor **330**, impedance matching may be facilitated by using the GND connection through the metal plate **650** according to the present embodiment. The shape of the spring may be deformed in various forms, and the spring constant K may be lowered. As for the spring constant, K in the rotation direction may be one or more times higher than in the X and Y directions, and K in the Z direction may be 50 times higher or more. The metal plate **650** may be omitted. However, even in this case, the target value of the spring constant may be set to be the same. The interposer is easy to move in the X and Y directions and may be difficult to move in the Z direction.

By adopting the connection substrate **600** and the metal plate **650**, it is possible to easily manage the bending portion and manage the tolerance. By increasing the spring constant **k** compared to the connection substrate **600** as a single product, the influence of the connection substrate **600** can be reduced compared to the influence of the spring. For easy tuning, the first order resonance frequency of OIS should be within 40 to 150 Hz, and the resonant frequency regarding the rotational direction may be set higher than the first order resonant frequency. The weight of the second moving part **300** comprising the image sensor **330** and the second substrate **310** may be 2 g or less, and the spring constant **k** value may be 100 N/m or more. The first order resonant frequency and third order resonant frequency can be managed at 100 Hz or more to facilitate tuning. The interposer substrate may be the second substrate **310**. A hole may be formed in the center of the interposer substrate.

A driver IC and a Hall element are disposed in the second substrate **310**, and the rigid portion of the second substrate **310** and the FPCB portion of the connection substrate **600** can be electrically connected in two or more portions. At this time, it can be connected in 2 to 4 portions. The FPCB can be bent twice. Since the bending portion of the connection substrate **600** does not have a large driving displacement and the shape must be maintained, the spring or GND may be wider than other positions. The bending angle of the connection substrate **600** may be 80 to 100 degrees. The present embodiment may comprise an actuator that connects the circuit signal to the main PCB using the sensor-shift connection substrate **600**. In the present embodiment, a spring may be added to a portion of the interposer. The interposer may be electrically connected to the ground GND. The first order resonant frequency may be within 40 to 150 Hz. The rotation mode is positioned between the first order resonance frequency and the tilt mode, and the rotation frequency may be one or more times the first order resonance frequency. The interval between the first order resonant frequency and the third order resonant frequency may be 100 Hz or more. The spring constant **k** in the X, Y direction and Z direction of the connection member, which is a coupled body of the connection substrate **600** and the metal plate **650**, may be **50** times higher than **k** in the Z direction.

In a present embodiment, the first order resonance point may be located within 60 to 80 Hz, the second order resonance point may be located within 150 to 170 Hz, and the third order resonance point may be located within 290 to 310 Hz. The gain value is higher at the first order resonance point than that of at the second order resonance point, and may be higher at the second order resonance point than that of at the third order resonance point. For reference, when the voltage that forms a force in x-axis direction is applied as a sine wave, a point at which the output voltage is maximally generated rather than the input voltage may be the first order resonance point. A point at which rotation occurs may be a second order resonance point. A point at which the tilt occurs may be a third order resonance point. When measuring the resonance point, the waveform may be a sine wave. The frequency may be 5 Hz to 10 KHz. The sweep may be 300 steps/sweep. The power source may be 0 VDC and 100 mV p-p. The lens weight may be 0.097 g.

Hereinafter, the operation of the camera device according to the present embodiment will be described with reference to the drawings.

FIG. 27 is a view for explaining the operation of the autofocus function of a camera device according to the present embodiment.

When a power source is applied to the first coil **430** of the camera device **10** according to the present embodiment, an electromagnetic field is formed in the first coil **430**, and the first coil **430** may move in an optical axis direction (z-axis direction) through electromagnetic interaction with the driving magnet **410**. At this time, the first coil **430** may move in an optical axis direction together with the first moving part **200** comprising the lens **220**. In this case, since the lens **220** moves away from or closer to the image sensor **330,** the focus of the subject may be adjusted. In order to apply a power source to the first coil **430**, any one or more of a current and a voltage may be applied.

When a current in a first direction is applied to the first coil **430** of the camera device **10** according to the present embodiment, the first coil **430** moves in an upward direction of the optical axis direction through electromagnetic interaction with the driving magnet **410** (refer to **a** of FIG. 27). At this time, the first coil **430** may move the lens **220** in an upward direction of the optical axis direction to move it away from the image sensor **330**.

When a current in a second direction opposite to the first direction is applied to the first coil **430** of the camera device **10** according to the present embodiment, The first coil **430** may move in a lower direction (refer to **b** of FIG. 27) of the optical axis direction through electromagnetic interaction with the driving magnet **410**. At this time, the first coil **430** may move the lens **220** in a lower direction of the optical axis to be closer to the image sensor **330**.

FIGS. 28 to 30 are diagrams for explaining the operation of the handshake correction function of a camera device according to the present embodiment.

When a power source is applied to the second coil **440** of the camera device **10** according to the present embodiment, an electromagnetic field is formed in the second coil **440** and the second coil **440** may move in a direction perpendicular to the optical axis direction through electromagnetic interaction with the driving magnet **410**. In addition, the second coil **440** may rotate with respect to the optical axis through electromagnetic interaction with the driving magnet **410**. At this time, the second coil **440** may move or rotate together with the second moving part **300** comprising the image sensor **330**. In the present embodiment, the second coil **440** may move the image sensor **330** so that the shaking of the camera device **10** detected by the gyro sensor **490** is compensated.

FIG. 28 is a diagram for explaining driving in which the image sensor of the camera device according to the present embodiment is shifted along the x-axis.

When the current in a first direction is applied to the second-first coil **441** of the camera device **10** according to the present embodiment, the second-first coil **441** may move in one direction (refer to **a** of FIG. 20) of a first direction (x-axis direction) perpendicular to the optical axis direction through electromagnetic interaction with the driving magnet **410**. At this time, the second-first coil **441** may move the image sensor **330** in one direction of a first direction perpendicular to the optical axis direction. Conversely, when a current in a second direction opposite to the first direction is applied to the second-first coil **441**, the second-first coil **441** may move in the other direction of the first direction (x-axis direction) perpendicular to the optical axis direction through electromagnetic interaction with the driving magnet **410**. At this time, the second-first coil **441** may move the image sensor **330** in the other of the first direction perpendicular to the optical axis direction.

FIG. 29 is a diagram for explaining driving in which an image sensor of a camera device according to the present embodiment is shifted along the y-axis.

When the current in a first direction is applied to the second-first coil **442** of the camera device **10** according to the present embodiment, the second-second coil **442** may move in one direction (refer to **b** of FIG. 29) of the first direction (y-axis direction) perpendicular to the optical axis direction through electromagnetic interaction with the driving magnet **410**. At this time, the second-second coil **442** may move the image sensor **330** in one of the second directions perpendicular to the optical axis direction. Conversely, when a current in a second direction opposite to the first direction is applied to the second-second coil **442**, the second-second coil **442** may move in the other direction of the first direction (y-axis direction) perpendicular to the optical axis direction through electromagnetic interaction with the driving magnet **410**. At this time, the second-second coil **442** may move the image sensor **330** in the other of the second direction perpendicular to the optical axis direction.

FIG. 30 is a view for explaining the driving of an image sensor of a camera device according to the present embodiment is rolled around the z-axis.

When the current in the first direction is applied to the second-first coil **441** and the second-second coil **442** of the camera device **10** according to the present embodiment, the second-first coil **441** and the second-second coil **442** may rotate in one direction about the optical axis through electromagnetic interaction with the driving magnet **410** (refer to **c** of FIG. 30). At this time, the second-first coil **441** and the second-second coil **442** may rotate the image sensor **330** in one direction about the optical axis. At this time, one direction may be counterclockwise. Conversely, when a current in a second direction opposite to the first direction is applied to the second-first coil **441** and the second-second coil **442**, the second-first coil **441** and the second-second coil **442** may rotate in other directions about the optical axis through electromagnetic interaction with the driving magnet **410**. At this time, the second-first coil **441** and the second-second coil **442** may rotate the image sensor **330** in other direction about the optical axis. At this time, the other direction may be clockwise.

Hereinafter, an optical device according to the present embodiment will be described with reference to the drawings.

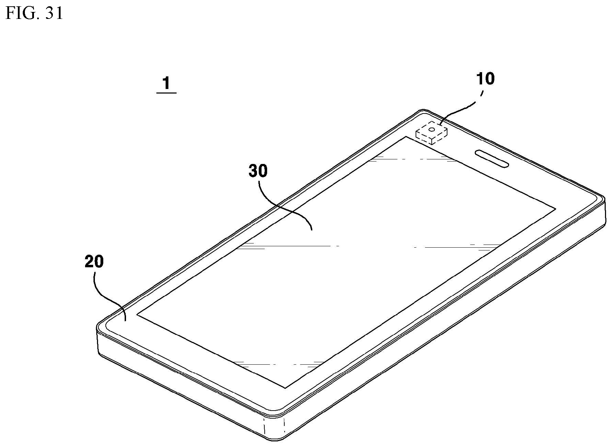

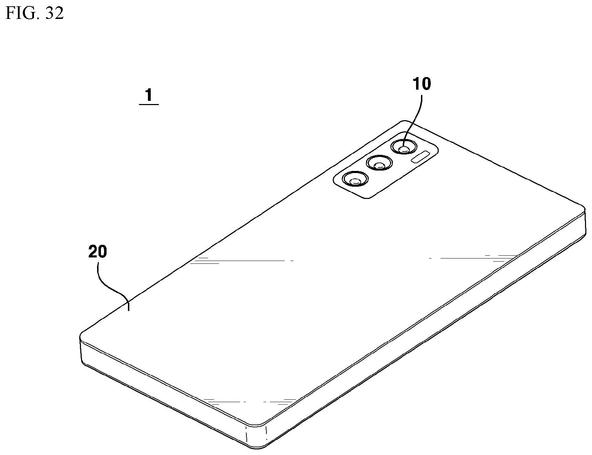

FIG. 31 is a perspective view of an optical device according to the present embodiment, and FIG. 32 is a perspective view of an optical device according to the present embodiment as viewed from a different direction from FIG. 31.

The optical device **1** may comprise any one or more among hand phone, portable phone, portable terminal, mobile terminal, smart phone, smart pad, portable smart device, digital camera, laptop computer, digital broadcasting terminal, personal digital assistants (PDA), portable multimedia player (PMP), and navigation. The optical device **1** may comprise any device for photographing an image or a picture.

The optical device **1** may comprise a main body **20**. The optical device **1** may comprise a camera device **10**. The camera device **10** may be disposed in the main body **20**. The camera device **10** may photograph a subject. The optical device **1** may comprise a display **30**. The display **30** may be disposed in the main body **20**. The display **30** may output any one or more of a video and an image photographed by the camera device **10**. The display **30** may be disposed on a first surface of the main body **20**. The camera device **10** may be disposed on any one or more of a first surface of the main body **20** and a second surface opposite to the first surface.

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

### [ITEMS]

[Item 1] A camera device comprising:
   a fixed part;
   a first moving part comprising a bobbin and a lens coupled to the bobbin and disposed in the fixed part;
   a second moving part comprising an image sensor and disposed in the fixed part;
   a first magnet and a second magnet disposed on the fixed part;
   a first coil disposed on the first moving part and disposed at a position corresponding to the first magnet; and
   a second coil disposed on the second moving part and disposed at a position corresponding to the second magnet,
   wherein the first coil is configured to move the first moving part in an optical axis direction,
   wherein the first magnet is overlapped with the second magnet in the optical axis direction,
   wherein the first magnet comprises a first unit magnet and a second unit magnet disposed opposite to each other with respect to an optical axis, and a third unit magnet and a fourth unit magnet disposed opposite to each other with respect to the optical axis,
   wherein the first unit magnet comprises a part protruding to an outside of the bobbin in a x-axis direction perpendicular to the optical axis direction, and
   wherein the part of the first unit magnet is overlapped with the third unit magnet in y-axis direction perpendicular to the optical axis direction and the x-axis direction.
[Item 2] The camera device of item 1, wherein the first magnet comprises a part protruding in the x-axis direction with respect to an imaginary plane comprising an outer side surface of the bobbin.
[Item 3] The camera device of item 2, wherein a first region of the first magnet which is not protruded is overlapped with the bobbin in the x-axis direction.
[Item 4] The camera device of item 3, wherein a region of the second magnet below the first region of the first magnet is not overlapped with the bobbin in the x-axis direction.
[Item 5] A camera device comprising:
   a fixed part;
   a first moving part comprising a bobbin and configured to move in an optical axis direction;
   a second moving part comprising an image sensor and configured to move in a direction perpendicular to the optical axis direction;
   a first magnet and a second magnet disposed on the fixed part;
   a first coil disposed on the first moving part and disposed at a position corresponding to the first magnet; and
   a second coil disposed on the second moving part and disposed at a position corresponding to the second magnet,
   wherein the bobbin comprises first to fourth side surfaces,
   wherein the first magnet comprises a first unit magnet disposed to correspond to the first side surface of the bobbin, a second unit magnet disposed to correspond to the second side surface of the bobbin, and a third unit magnet disposed to correspond to the third side surface of the bobbin,
   wherein the first side surface of the bobbin and the second side surface of the bobbin are disposed opposite to each other, and
   wherein a portion of the first unit magnet is overlapped with the third unit magnet in a y-axis direction perpendicular to the optical axis direction.
[Item 6] The camera device of item 5, wherein the first unit magnet is disposed between a first corner of the fixed part and a second corner of the fixed part and is disposed closer to the first corner than to the second corner.
[Item 7] A camera device comprising:
   an image sensor configured to move in a direction perpendicular to an optical axis direction;
   a housing disposed on the image sensor;
   a bobbin disposed in the housing;
   a lens coupled to the bobbin;
   a first magnet and a second magnet disposed on the housing,
   wherein the housing comprises first to fourth side surfaces,
   wherein the second magnet comprises a first unit magnet disposed to correspond to the first side surface of the housing, a second unit magnet disposed to correspond to the second side surface of the housing, and a third unit magnet disposed to correspond to the third side surface of the housing,
   wherein the first side surface of the housing and the second side surface of the housing are disposed opposite to each other, and
   wherein a part of the first unit magnet of the second magnet is overlapped with the third unit magnet of the second magnet in a y-axis direction perpendicular to the optical axis direction.
[Item 8] The camera device of item 7, comprising:
   a first coil disposed at a position corresponding to the first magnet; and
   a second coil disposed at a position corresponding to the second magnet,
   wherein the first unit magnet of the second magnet comprises a part protruding to an outside of the second coil in a x-axis direction perpendicular to the optical axis direction and the y-axis direction.
[Item 9] The camera device of item 8, wherein the part of the first unit magnet of the second magnet is not overlapped with the second coil in the optical axis direction.
[Item 10] A camera device comprising:
   a fixed part;
   a first moving part comprising a lens and disposed in the fixed part;
   a second moving part comprising an image sensor and disposed in the fixed part;
   a first magnet and a second magnet disposed on the fixed part;
   a first coil disposed on the first moving part and disposed at a position corresponding to the first magnet; and
   a second coil disposed on the second moving part and disposed at a position corresponding to the second magnet,
   wherein the first coil is configured to move the first moving part in an optical axis direction,
   wherein the first magnet is overlapped with the second magnet in the optical axis direction,
   wherein the first magnet comprises a first unit magnet and a second unit magnet disposed opposite to each other with respect to an optical axis, and a third unit magnet and a fourth unit magnet disposed opposite to each other with respect to the optical axis,
   wherein the first unit magnet comprises a first surface facing the first coil, and
   wherein the first unit magnet is overlapped with the third unit magnet in a direction perpendicular to the first surface.

## Claims

1. A camera device **characterized by**:
a fixed part (100);
an image sensor (330) configured to move relative to the fixed part (100);
a second magnet (420) and a second coil (440) configured to interact with each other to move the image sensor (330) relative to the fixed part (100);
a connection substrate (600) electrically connected to the image sensor (330) and configured to movably support the image sensor (330); and
a metal plate (650) disposed on the connection substrate (600),
wherein the metal plate (650) is configured to provide impedance matching.

2. The camera device of claim 1, wherein the metal plate (650) is connected to a ground terminal of the connection substrate (600).

3. The camera device of claim 1 or 2, wherein the metal plate (650) is electrically connected to the image sensor (330).

4. The camera device of any one of claims 1 to 3, wherein the connection substrate (600) comprises two insulation layers (601) and a conductive layer (602) disposed between the two insulation layers (601), and
wherein the metal plate (650) comprises a material different from a material of the conductive layer (602).

5. The camera device of any one of claims 1 to 4, wherein the fixed part (100) comprises a first substrate (110),
wherein a second substrate (310) is configured to move together with the image sensor (330),
wherein the connection substrate (600) comprises a connection part (610) coupled to the second substrate (310), a terminal part (630) coupled to the first substrate (110), and an extension part (620) connecting the connection part (610) and the terminal part (630), and
wherein the metal plate (650) is disposed on the extension part (620).

6. The camera device of claim 5, wherein the metal plate (650) is disposed on an outer surface of the extension part (620).

7. The camera device of claim 5 or 6, wherein, in an optical axis direction of the image sensor (330), a length of the metal plate (650) is the same as a length of the extension part (620).

8. The camera device of any one of claims 1 to 7, comprising:
a lens (220); and
a first magnet (410) and a first coil (430) configured to interact with each other to move the lens (220) in an optical axis direction.

9. The camera device of claim 8, comprising a bobbin (210) coupled to the lens (220),
wherein the first coil (430) is disposed on the bobbin (210),
wherein the first magnet (410) comprises a first unit magnet (411) and a second unit magnet (412) disposed opposite to each other with respect to an optical axis, and a third unit magnet (413) and a fourth unit magnet (414) disposed opposite to each other with respect to the optical axis,
wherein the first unit magnet (411) comprises a part protruding outwardly from the bobbin (210) in an x-axis direction perpendicular to the optical axis direction, and
wherein the part of the first unit magnet (411) is overlapped with the third unit magnet (413) in a y-axis direction perpendicular to each of the optical axis direction and the x-axis direction.

10. The camera device of claim 9, wherein the first unit magnet (411) comprises a first surface facing the first coil (430), and
wherein the first unit magnet (411) is overlapped with the third unit magnet (413) in a direction perpendicular to the first surface of the first unit magnet (411).

11. The camera device of claim 10, wherein, when viewed in a direction in which the first surface faces, a horizontal length of the second coil (440) is greater than a horizontal length of the second magnet (420).

12. The camera device of any one of claims 8 to 11, wherein, in the optical axis direction, a length of the first magnet (410) is greater than a length of the second magnet (420).

13. The camera device of any one of claims 8 to 12, wherein the first magnet (410) is bonded with the second magnet (420) by an adhesive.

14. The camera device of any one of claims 8 to 12, comprising a yoke (425) disposed between the first magnet (410) and the second magnet (420).

15. An optical device comprising:
a main body (20);
the camera device of any one of claims 1 to 14 disposed in the main body (20); and
a display (30) disposed in the main body (20) and configured to output a video or an image photographed by the camera device.
